# EUROPEAN PATENT APPLICATION

(11) **EP 4 572 236 A1**
(43) Date of publication of application: **18.06.2025**
(21) Application number: 24172888.0
(22) Date of filing: 29.04.2024
(51) Int. Cl.: H04L 12/28, H04W 84/00, H04W 84/20, H04W 88/06, H04W 84/22

(54) **HOME APPLIANCE AND METHOD OF CONTROLLING THE SAME**

(30) Priority: 12.12.2023 KR 20230179329
(71) Applicant: LG Electronics Inc., Yeongdeungpo-gu Seoul 07336 (KR)
(72) Inventor: YOON, Daejoong, 06772 Seoul (KR); SOHN, Dongwoo, 06772 Seoul (KR); KOH, Changseok, 06772 Seoul (KR)
(74) Representative: Vossius & Partner Patentanwälte Rechtsanwälte mbB

(57) **Abstract**

Provided are a home appliance connectable to an access point providing a short-range communication network and a method of controlling the home appliance. The home appliance includes a wireless communication unit for short-range communication, and a controller configured to communicate with an access point, transmit a discovery signal for checking whether a host device is present in a local network based on the access point, perform control to operate as the host device in the local network in response to a discovery response signal to the discovery signal not being received, and perform control to operate as a client device in the local network in response to the discovery response signal to the discovery signal being received.

## Description

### TECHNICAL FIELD

The present disclosure relates to a home appliance connectable to an access point providing a short-range communication network and a method of controlling the home appliance, and more particularly, to formation of a local network by a plurality of home appliances connected to the access point.

### BACKGROUND

Home appliances may include a variety of products such as washing machines, refrigerators, and robot vacuum cleaners. The home appliance may be equipped with a user interface, and a user may connect the home appliance to a wireless network through the user interface of the home appliance.

Home appliances may be connected to a wireless network, such as an access point, through their communication module. A user may search for a wireless network of a home appliance through the user interface of an external terminal (e.g., a smart phone) and connect the home appliance to the discovered wireless network.

However, there is a problem that communication may become unstable when too many home appliances access one access point. There is a problem that home appliances located in communication shadow areas outside a communication coverage of the access point may have a difficulty in accessing the wireless network.

### SUMMARY

An object of the present disclosure is to provide a home appliance and a method of controlling the same, by which only some of home appliances are connected directly to an access point and the remaining home appliances are connected to the wireless network through some of the home appliances without a need to directly access the access point to which all of the home appliances provide a wireless network even if many home appliances are in the house.

An object of the present disclosure is to provide a home appliance and a method of controlling the same, by which a home appliance in a communication shadow area may access a wireless network through another home appliance located in a communication coverage.

To achieve the above objects, the present disclosure provides a home appliance including a wireless communication unit for short-range communication, and a controller configured to communicate with an access point, transmit a discovery signal for checking whether a host device is present in a local network based on the access point, perform control to operate as the host device in the local network in response to a discovery response signal to the discovery signal not being received, and perform control to operate as a client device in the local network in response to the discovery response signal to the discovery signal being received.

The controller may be configured to control short-distance communication access to the access point based on AP information of the access point, received from a mobile terminal.

Based on the home appliance not being capable of accessing the access point through short-distance communication based on the AP information of the access point, received from a mobile terminal, the controller may be configured to receive AP information of an external home appliance connected to the access point via short-distance communication, from the mobile terminal, access the external home appliance through short-distance communication based on the received AP information of the external home appliance, and perform control communication with the access point through the external home appliance.

Based on the home appliance operating as the host device, the controller may perform control to configure a network topology for a plurality of home appliances in the local network, and the plurality of home appliances may include the home appliance and at least one external home appliance.

The controller may be configured to receive first network information from a first external home appliance of the at least one external home appliance, calculate a network topology for the first external home appliance based on the first network information, and perform control to request the first external home appliance to configure the calculated network topology.

Based on the network topology of the first external home appliance being completed, the controller may be configured to perform control to notify each of the at least one external home appliance of completion of configuration of the network topology of the first external home appliance.

Based on a network topology reconfiguration event occurring, the controller may be configured to receive separate network information from each of the at least one external home appliance, calculate a network topology for each of the at least one external home appliance based on the separate network information, and perform control to request at least some of the at least one external home appliance to reconfigure a network topology according to the calculated network topology.

The network topology reconfiguration event may include at least one of arrival of a certain period, arrival of a certain time zone, reduction in a total amount of communication data in the local network to a certain level or less, or receiving a user command desiring to reconfigure the network topology.

Based on a host role transfer event occurring, the controller may be configured to request a second external home appliance of the at least one external home appliance to receive transfer of a host role, and control the home appliance to operate as the client device.

The host role transfer event may include at least one of completion of reconfiguration of the network topology or receiving of a user command desiring to transfer the host role.

The controller may be configured to provide information about the network topology to the mobile terminal, and perform control to request a second external home appliance to receive transfer of a host role according to the user command desiring to transfer the host role, received from the mobile terminal.

The controller may be configured to control each of the at least one external home appliances to periodically notify that the home appliance currently operates as the host device.

Based on the home appliance operating as the client device, the controller may be configured to transmit network information of the home appliance to the host device in the local network, receive target AP information from the host device, and perform control to access a target external home appliance corresponding to the target AP information through short-distance communication.

The network information may include AP information of a network node that the home appliance currently and directly accesses through short-distance communication and AP information of a network node discovered around the home appliance.

The AP information of the network node may include service set identifier (SSID) information of the network node and quality information of a signal received from the network node.

The controller may be configured to perform control to notify the host device that access to the target external home appliance through short-distance communication is successful.

The controller may be configured to set the home appliance as a new host device according to a request of the host device, and perform control to notify each external home appliance in the local network that the home appliance becomes the new host device.

The controller may be configured to receive a host alive signal from the host device, set the home appliance as a new host device based on a new host alive signal not being received from the host device by an expiration time in the host alive signal, and perform control to notify each external home appliance in the local network that the home appliance becomes the new host device.

The controller may be assigned an IP address for a third external home appliance that attempts short-distance communication access to the home appliance from the access point and may perform control to provide the IP address to a third external home appliance.

To achieve the above objects, the present disclosure provides a method of controlling a home appliance including communicating with an access point, transmitting a discovery signal for checking whether a host device is present in a local network based on the access point, performing control to operate as the host device in the local network in response to a discovery response signal to the discovery signal not being received, and performing control to operate as a client device in the local network in response to the discovery response signal to the discovery signal being received.

The effects of the home appliance and the method of controlling the same according to the present disclosure are as follows.

According to an aspect of the present disclosure, even if many home appliances are in the house, only some of home appliances are connected directly to an access point and the remaining home appliances are connected to the wireless network through some of the home appliances without a need to directly access the access point to which all of the home appliances provide a wireless network, thereby smoothly performing wireless communication through the access point.

According to an aspect of the present disclosure, a home appliance in a communication shadow area may access a wireless network through another home appliance located in a communication coverage.

According to an aspect of the present disclosure, a network topology of a plurality of home appliances that form a local network by accessing an access point may actively change depending on a communication environment of the plurality of home appliances.

### BRIEF DESCRIPTION OF THE DRAWINGS

The present disclosure will become more fully understood from the detailed description given herein below and the accompanying drawings, which are given by illustration only, and thus are not limitative of the present disclosure.
FIG. 1 shows a wireless communication environment in which a home appliance may communicate with an external management server through a wireless network provided by an access point.
FIG. 2 is a block diagram for explaining a mobile terminal related to the present disclosure.
FIG. 3 is a block diagram for explaining a home appliance related to the present disclosure.
FIG. 4 is an example of a network topology, according to an aspect of the present disclosure.
FIG. 5 shows an example of a network topology, according to an aspect of the present disclosure.
FIG. 6 shows an example of information to be included in the discovery signal and the discovery response signal, according to an aspect of the present disclosure.
FIG. 7 shows an example of a network topology, according to an aspect of the present disclosure.
FIG. 8 shows an example of information to be included in a join request signal and a join request response signal, according to an aspect of the present disclosure.
FIG. 9 shows an example of information to be included in a reconfiguration request signal and a reconfiguration response signal, according to an aspect of the present disclosure.
FIG. 10 shows an example of information to be included in a Wi-Fi score report signal and a Wi-Fi score report response signal, according to an aspect of the present disclosure.
FIG. 11 shows an example of information to be included in a reconfiguration start request signal, a reconfiguration start request response signal, and a reconfiguration completion signal, according to an aspect of the present disclosure.
FIG. 12 shows an example of a network topology, according to an aspect of the present disclosure.
FIG. 13 shows an example of a network topology, according to an aspect of the present disclosure.
FIG. 14 is a flowchart of a case in which a home appliance accesses an access point via Wi-Fi, according to an aspect of the present disclosure.
FIG. 15 is a flowchart of a case in which one home appliance accesses another home appliance via Wi-Fi, according to an aspect of the present disclosure.
FIG. 16 is a flowchart of a case in which a home appliance participating in a local network, according to an aspect of the present disclosure.
FIG. 17 is a flowchart of a case in which a network topology for a home appliance participating in a local network is configured, according to an aspect of the present disclosure.
FIG. 18 shows an example of a network topology, according to an aspect of the present disclosure.
FIG. 19 shows an example of information to be included in a Wi-Fi score request signal and a Wi-Fi score response signal, according to an aspect of the present disclosure.
FIG. 20 shows an example of information to be included in a host change request signal and a host change response signal, according to an aspect of the present disclosure.
FIG. 21 is a flowchart of a case in which a network topology for a plurality of home appliances is reconfigured, according to an aspect of the present disclosure.
FIG. 22 is a flowchart of a case in which a host role is transferred between two home appliances, according to an aspect of the present disclosure.
FIG. 23 shows an example of a network topology, according to an aspect of the present disclosure.
FIG. 24 shows an example of information to be included in a host alive signal, according to an embodiment of the present disclosure.
FIG. 25 is a flowchart of the case in which a host role is transferred between two home appliances, according to an embodiment of the present disclosure.
FIG. 26 shows an example of a network topology, according to an aspect of the present disclosure.
FIG. 27 shows a schematized and displayed network topology, according to an aspect of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Each of these elements may be configured as a separate individual hardware module or implemented as two or more hardware modules. Two or more elements may be implemented as a single hardware module. In some cases, at least one of these elements may be implemented as software.

It will be understood that although the terms first, second, etc. may be used herein to describe various elements, these elements should not be limited by these terms. These terms are generally only used to distinguish one element from another.

The terminology used in the present disclosure is used only to describe specific embodiments, not intended to limit the present disclosure. A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

In this disclosure, the expression "at least one of A or B" may mean "A", "B", or "A and B".

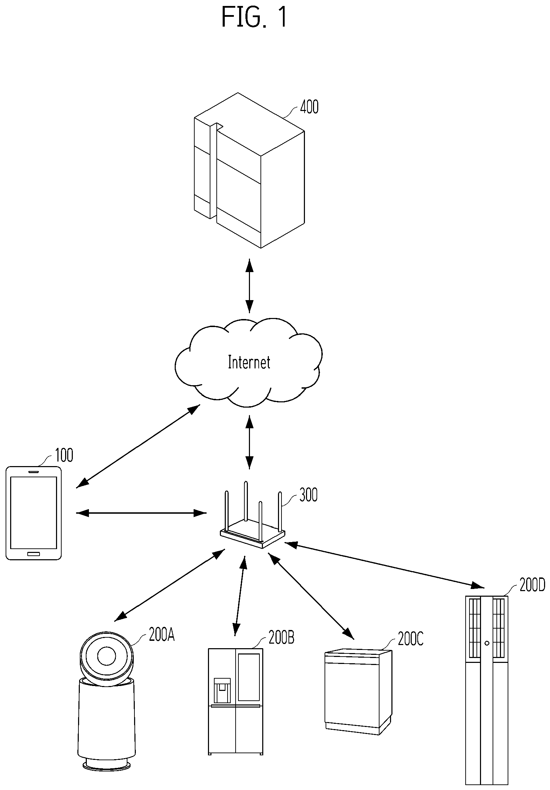

Hereinafter, with reference to FIG. 1, a wireless communication environment in which a home appliance may communicate with an external management server (or remote control server) through a wireless network provided by an access point will be described.

FIG. 1 shows a wireless communication environment in which a home appliance may communicate with an external management server through a wireless network provided by an access point.

At least one home appliance 200A, 200B, 200C, and 200D may wirelessly communicate with an external management server 400 through an access point (AP) 300 providing a wireless network. Thus, the at least one home appliance 200A, 200B, 200C, and 200D may be remotely controlled by the external management server 400.

A mobile terminal 100 such a smart phone may wirelessly communicate with the external management server 400 through the access point 300 or may communicate wirelessly with the external management server 400 without through the access point 300 by using the external management server 400 and a mobile communication network (not shown).

Thus, the user may control the at least one home appliance 200A, 200B, 200C, and 200D through the external management server 400 by manipulating the mobile terminal 100.

The mobile terminal 100 may wirelessly communicate with the at least one home appliance 200A, 200B, 200C, and 200D, and the at least one home appliance 200A, 200B, 200C, and 200D may provide AP information for accessing to the access point to the at least one home appliance 200A, 200B, 200C, and 200D. The AP information may include information required for access to the access point 300 (e.g., a service ser identifier (SSID) and a password of the access point 300).

The at least one home appliance 200A, 200B, 200C, and 200D may access the access point 300 by using the AP information.

Hereinafter, when there is no need to distinguish the at least one home appliance from each other, reference numeral 200 will be used. However, when it is necessary to distinguish the at least one home appliance from each other, an English alphabet will be used after 200, such as 200A, 200B, 200C, 200D, etc. In addition, when it is necessary to distinguish each of these components from each other, an English alphabet will be used as a reference number after the reference number for each component.

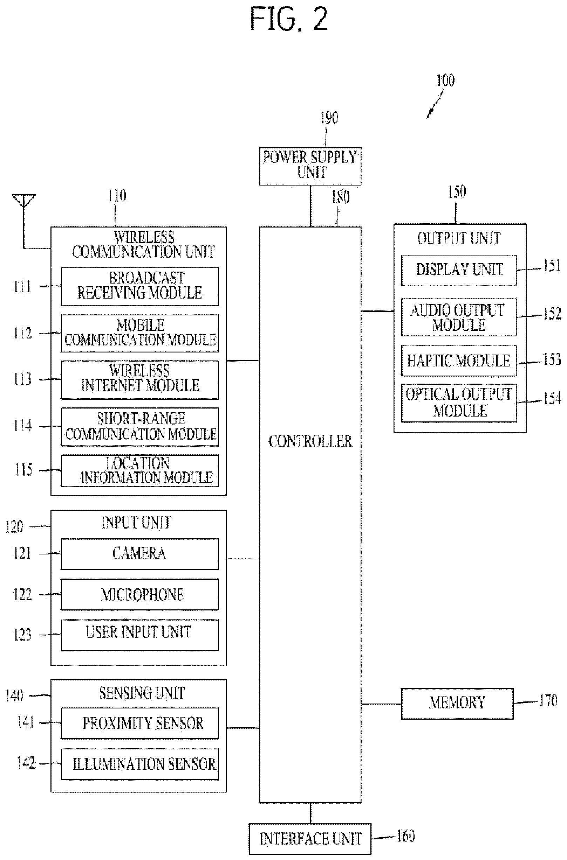

Hereinafter, with reference to FIG. 2, the mobile terminal 100 of FIG. 1 will be described. FIG. 2 is a block diagram for explaining a mobile terminal related to the present disclosure.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 2, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit (or wireless transceiver) 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 2, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that may be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller (or processor) 180 typically functions to control overall operation of the mobile terminal 100, in addition to the operations associated with the application programs.

The controller 180 may provide or process information or functions appropriate for a user by processing signals, data, information and the like, which are input or output by the various components depicted in Fig. 2, or activating application programs stored in the memory 170. As one example, the controller 180 controls some or all of the components illustrated in FIG. 2 according to the execution of an application program that have been stored in the memory 170.

The power supply unit 190 may be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 2, various components depicted in this figure will now be described in more detail.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 may transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE) , LTE-A(Long Term Evolution-Advanced), 5G and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), 5G and the like. The wireless Internet module 113 may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LTE-A, 5G and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area network.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

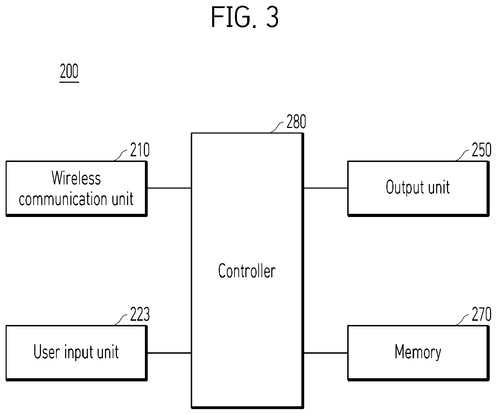

Hereinafter, with reference to FIG. 3, the home appliance 200 of FIG. 1 will be described. FIG. 3 is a block diagram for explaining a home appliance related to the present disclosure. The home appliance may include different components depending on a type thereof. Hereinafter, the description will be given in terms of components related to the present disclosure among the various components that may be included in the home appliance. The home appliance may be configured to include other components in addition to the components below.

The home appliance 200 may include a wireless communication unit 210, a user input unit 223, an output unit 250, a memory 270, and a controller 280.

The wireless communication unit 210 may include at least one of a mobile communication module, a wireless Internet module, and a short-range communication module.

The mobile communication module can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE) , LTE-A(Long Term Evolution-Advanced), 5G and the like).

Examples of wireless signals transmitted and/or received via the mobile communication module include audio call signals, video (telephony) call signals, or various formats of data to support communication of text and multimedia messages

The wireless Internet module is configured to facilitate wireless Internet access. This module may be internally or externally coupled to the home device (or home appliance) 200. The wireless Internet module may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A Long Term Evolution-Advanced), 5G and the like. The wireless Internet module may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LTE-A, 5G and the like, as part of a mobile communication network, the wireless Internet module 113 performs such wireless Internet access. As such, the Internet module may cooperate with, or function as, the mobile communication module.

The short-range communication module is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module in general supports wireless communications between the home device 200 and a wireless communication system, communications between the home device 200 and another home device 200 or mobile terminal 100, or communications between the mobile terminal 100 and a network where another mobile terminal 100 or home device 200 (or an external server) is located, via wireless area networks. One example of the wireless area networks is a wireless personal area network.

The user input unit 223 is a component that permits input by a user. Such user input may enable the controller 280 to control operation of the home device 200. The user input unit 223 may include one or more of a mechanical input element (for example, a key, a button located on a front and/or rear surface or a side surface of the home device 200, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The output unit 250 is typically configured to output various types of information, such as audio, video, tactile output, and the like. The output unit 250 may include a display unit, an audio output module, a haptic module, and an optical output module. The display unit may have an inter-layered structure or an integrated structure with a touch sensor in order to facilitate a touch screen. The touch screen may provide an output interface between the home device 200 and a user, as well as function as the user input unit 223 which provides an input interface between the home device 200 and the user.

The memory 270 is typically implemented to store data to support various functions or features of the home device 200. For instance, the memory 270 may be configured to store application programs executed in the home device 200, data or instructions for operations of the home device 200, and the like. Some of these application programs may be downloaded from an external server via wireless communication. Other application programs may be installed within the home device 200 at time of manufacturing or shipping, which is typically the case for basic functions of the home device 200. It is common for application programs to be stored in the memory 270, installed in the home device 200, and executed by the controller 280 to perform an operation (or function) for the home device 200.

The controller 280 typically functions to control overall operation of the home device 200, in addition to the operations associated with the application programs.

The mobile terminal 100 and the home appliance 200 may be configured to execute a software AP for another mobile terminal and/or another home appliance. The software AP may operate a wireless LAN client that allows the mobile terminal 100 and the home appliance 200 to each access the access point 300 and implement a role of a wireless access point in software to operate as another access point for another mobile terminal and/or another home appliance. That is, another mobile terminal and/or another home appliance may access the software AP provided by the mobile terminal 100 and the home appliance 200 and access a wireless network.

The most representative of short-range communications connecting between the access point 300 and the mobile terminal 100, between the access point 300 and the home appliance 200, between the mobile terminal 100 and the home appliance, and between a plurality of home appliances is Wi-Fi communication. Therefore, the short-range communication described below is assumed to be Wi-Fi communication. Accordingly, the short-range communication module of the mobile terminal 100 and the short-range communication module of the home appliance may be referred to as a Wi-Fi (communication) module. However, other short-range communications may be used in addition to the Wi-Fi communication.

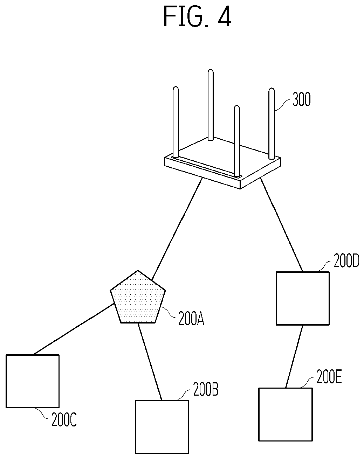

Hereinafter, with reference to FIG. 4, a network topology formed by a plurality of home appliances 200 together with the access point 300 will be described. FIG. 4 is an example of a network topology, according to an aspect of the present disclosure.

Network topology may refer to an arrangement structure of links connecting network nodes constituting a certain network. The plurality of home appliances 200 may each correspond to a network node.

The network topology of FIG. 4 will be described in more detail.

As shown in FIG. 4, a first home appliance 200A and a fourth home appliance 200D may each directly access the access point 300 through Wi-Fi communication.

A second home appliance 200B and a third home appliance 200C may each directly access the first home appliance 200A through Wi-Fi communication. The second home appliance 200B and the third home appliance 200C may be connected to the access point 300 through Wi-Fi communication through the first home appliance 200A. In other words, the first home appliance 200A may operate as a bridge device (or bridge node) for the second home appliance 200B and the third home appliance 200C. The second home appliance 200B and the third home appliance 200C may operate as end devices (or end nodes).

A fifth home appliance 200E may directly access the fourth home appliance 200D through Wi-Fi communication. The fifth home appliance 200E may be connected to the access point 300 through the fourth home appliance 200D by using Wi-Fi communication. In other words, the fourth home appliance 200D may operate as a bridge device for the fifth home appliance 200E. The fifth home appliance 200E may operate as an end device (or end node).

A home appliance that may execute a software AP among home appliances may operate as the bridge device. The bridge device may not automatically generate or allocate a new Internet protocol (IP) for another home appliance connected thereto, but rather receives an IP address for the other home appliance from the access point 300 and gives the IP address to the other home appliance. The bridge device may be assigned an IP address therefor from the access point 300.

Accordingly, the first home appliance 200A to the fifth home appliance 200E may form one local network together with the access point 300. Each of the first home appliance 200A to the fifth home appliance 200E may communicate with each other through the local network and may also communicate with the remote control server 400.

The network topology may be configured such that the number of home appliances (links) directly connected to the access point 300 is less than or equal to a first number (for example, 2 or 3). The network topology may be configured such that the number of home appliances (or links) directly connected to a lower end of one bridge device is less than or equal to a second number. The second number may be the same as the first number or may be different.

The first home appliance 200A, which operates as the bridge device, may also operate as a host device (or host node).

The host device may determine the network topology of the local network. The other home appliances 200B, 200C, 200D, and 200E other than the first home appliance 200A operating as the host device may be referred to as client devices (or client nodes).

A role as the host device (i.e., host role) is not limited to one home appliance within the local network. The host role may be transferred from one home appliance to another home appliance in the local network. The transfer of the host role may be performed automatically as the network topology changes, or may be performed manually according to a user command.

As an example in relation to selecting one of multiple home appliances as a host device, when only one home appliance exists in the local network, one home appliance may perform a host role.

When a plurality of home appliances exists within the local network, a bridge device among the plurality of home appliances may perform a host role. When there is no bridge device among a plurality of home appliances, a home appliance with a good quality of communication signal with the access point may perform a host role among the plurality of home appliances.

When there is a plurality of bridge devices among the plurality of home appliances, one of the plurality of bridge devices may perform a host role in consideration of the quality of a communication signal between each bridge device and the access point, the number of other home appliances connected to a lower end of each bridge device, and the like. For example, when the quality of the communication signal between each bridge device and the access point is the same, the bridge device with the largest number of other home appliances connected to the lower end may perform the host role.

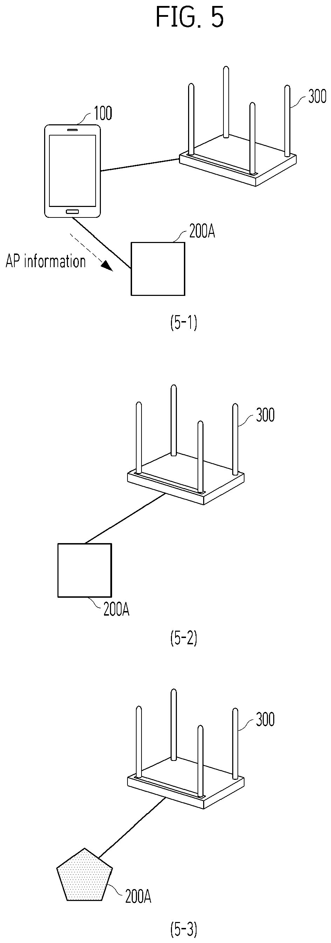

Hereinafter, with reference to FIG. 5, a process in which a new home appliance is first connected to the access point 300 through Wi-Fi communication will be described. FIG. 5 shows an example of a network topology, according to an aspect of the present disclosure.

As shown in (5-1) of FIG. 5, when the first home appliance 200A has never accessed to the access point 300 through Wi-Fi communication before, the first home appliance 200A may access the mobile terminal 100 through Wi-Fi communication.

That is, the mobile terminal 100 may have a remote control application (e.g., LG ThinQ) pre-installed to remotely control the first home appliance 200A. When a Wi-Fi communication module of the first home appliance 200A is activated, the mobile terminal 100 searches for the first home appliance 200A through the remote control application, and the mobile terminal 100 communicates with the discovered first home appliance 200A through Wi-Fi, which is well known in the art, and thus detailed explanation will be omitted.

The mobile terminal 100 may search for the access point 300 and may currently access the access point 300 or may have accessed the access point 300 in the past via Wi-Fi. In this case, the mobile terminal 100 may know AP information of the access point 300 (e.g., service set identifier (SSID) and password of the access point 300).

Accordingly, when the mobile terminal 100 accesses the first home appliance 200A via Wi-Fi, AP information of the access point 300 may be provided to the first home appliance 200A.

As shown in (5-2) of FIG. 5, the first home appliance 200A may attempt to access the access point 300 via Wi-Fi by using the provided AP information and succeeds.

When Wi-Fi connection to the access point 300 is successful, the first home appliance 200A may generate a discovery signal to detect whether a host device exists in the local network formed by the access point 300 and transmit the discovery signal within the local network. The discovery signal may be transmitted within the local network in a multicast manner.

When a host device exists within the local network, the first home appliance 200A may receive a discovery response signal from the host device in response to the discovery signal. The host device may extract an IP address of the home appliance that transmits the discovery signal from the header information of the discovery signal. The host device may transmit the discovery response signal by using the extracted IP address to the home appliance that transmits the discovery signal, for example, in a unicast manner. The same may be applied to the fact that the IP address in the header information may be used in unicast signal transmission.

However, in FIG. 5, it is assumed that only one home appliance, that is, the first home appliance 200A is present in the local network, and thus the first home appliance 200A may not receive the discovery response signal.

As the first home appliance 200A does not receive the discovery response signal for the discovery signal within a certain time from a time of transmitting the discovery signal, as shown in (5-3) of FIG. 5, the first home appliance 200A may select itself as a host device within the local network. An operation as the host device will be explained later.

As such, the access point 300 may form the local network (or network topology) together with the first home appliance 200A.

The host device may generate a host announcement signal to notify that the first home appliance 200A becomes a host device and transmit the host announcement signal to another network node within the local network. The host announcement signal may be transmitted, for example, in a unicast manner.

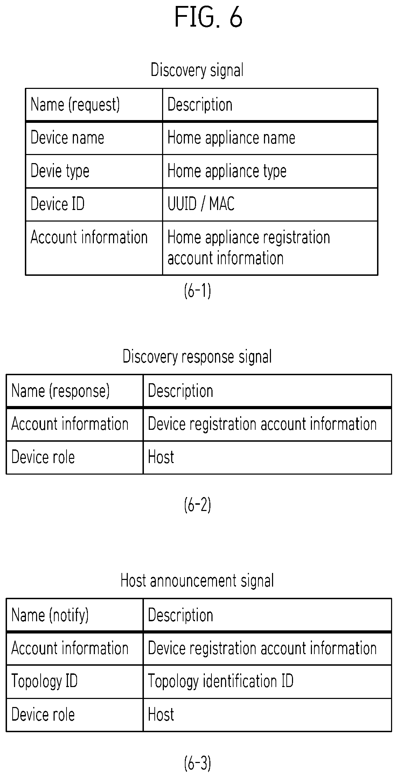

Hereinafter, with reference to FIG. 6, the discovery signal, the discovery response signal, and the host announcement signal will be described in more detail. FIG. 6 shows an example of information to be included in the discovery signal and the discovery response signal, according to an aspect of the present disclosure.

As shown in (6-1) of FIG. 6, the discovery signal may be a signal transmitted by a client device to discover whether a host device exists within the local network, and may include a device name, a device type, a device ID, and account information. The discovery signal may not necessarily include all of the information in (6-1) of FIG. 6 and may include at least part of the information. The discovery signal may not have to include only the information in (6-1) of FIG. 6, but may also include other information.

The device name may be a product name or unique name of the home appliance that generates and transmits the discovery signal (e.g., BESPOKE refrigerator or Whisen air conditioner).

The device type may be information about a type of home appliance (e.g., refrigerator, washing machine, air conditioner, or air purifier) that generates and transmits the discovery signal.

The device ID may be unique identifier information of a home appliance that generates and transmits the discovery signal. The unique identifier information may include at least one of a universally unique identifier (UUID) and a media access control (MAC) address.

The account information may be account information registered in the remote control server 400 by the first home appliance 200A and other home appliances described below. The account information allows home appliances belonging to the same user or user group to form one local network according to the present disclosure, and thus home appliances belonging to other users or user groups (for example, home appliances belonging to other users next door) may not be affected.

As shown in (6-2) of FIG. 6, the discovery response signal is a response signal of the discovery signal generated and transmitted by the host device in the local network, and may include account information and device role information. The discovery response signal may not necessarily include all of the information in (6-2) of FIG. 6 and may include only at least part of the information. The discovery response signal may not have to include only the information in (6-2) of FIG. 6 and may also include other information.

The account information is the same as the above description, and thus a detailed description thereof will be omitted.

The device role information may include information about a role within the local network of the home appliance that generates and transmits the discovery response signal. The discovery response signal is generated and transmitted by only a host device, and thus a role within the local network of the home appliance that generates and transmits the discovery response signal may be a host node.

In general, a role of a network node within a local network may be one of a host node, a bridge node, and an end node (or none node). The host node and the bridge node are as described above. The end node may refer to a node located at an end of a network topology that is neither the host node nor the bridge node. In the case of an even an end node, as a network topology is newly configured, a role of the end node may change to a bridge node when another node accesses a lower end of the end node. Similarly, in the case of an even a bridge node, as a network topology is newly configured, a role of the bridge node may change when other nodes below the bridge node disappear.

As shown in (6-3) of FIG. 6, the host announcement signal is a signal for informing other network nodes that the host device assumes the host role within the local network, and may include account information, topology ID, and device role information. The host announcement signal may not necessarily include all of the information in (6-3) of FIG. 6 and may include at least part of the information. The host announcement signal may not have to include only the information in (6-3) of FIG. 6, but may also include other information.

The account information is the same as the above description, and thus a detailed description thereof will be omitted.

The topology ID refers to identifier information for an individual network node to be used within the network topology. The host device may generate and maintain a topology ID thereof.

The device role information may include information about a role within the local network of the home appliance that generates and transmits the host announcement signal. Only a host device may generate and transmit the host announcement signal, and thus the role within the local network of the home appliance that generates and transmits the host announcement signal may be the host node.

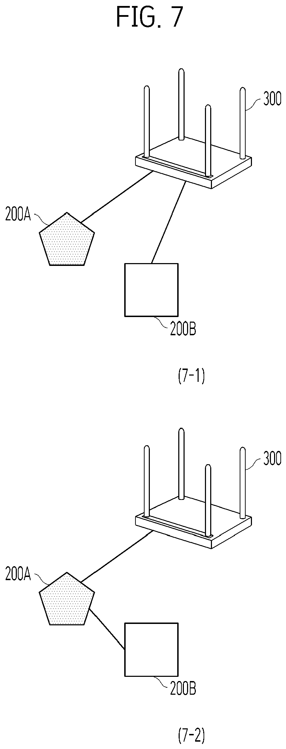

Hereinafter, with reference to FIG. 7, a process in which a network topology is newly configured in the local network when the second home appliance 200B accesses the access point 300 after the first home appliance 200A accesses the access point 300 will be described. FIG. 7 shows an example of a network topology, according to an aspect of the present disclosure.

As shown in (7-1) of FIG. 7, the second home appliance 200B may directly access the access point 300 through Wi-Fi communication. As described above with reference to FIG. 5, the second home appliance 200B may access the access point 300 via Wi-Fi through cooperation with the mobile terminal 100.

The second home appliance 200B that accesses the access point 300 transmits the discovery signal within the local network and receives the discovery response signal from the first home appliance 200A operating as the host device, and thus may recognize the first home appliance 200A as the host device within the local network. Accordingly, the second home appliance 200B may operate as a client device.

The second home appliance 200B may generate a join request signal requesting that the second home appliance 200B participate in the local network (or the network topology) and transmit the join request signal to the first home appliance 200A. The join request signal may be transmitted from the second home appliance 200B to the first home appliance 200A, for example, in a unicast manner.

The first home appliance 200A may generate a join response signal that approves or rejects participation of the home appliance (the second home appliance 200B in FIG. 7), which transmits the join request signal, in the local network in response to the join request signal and transmit the join response signal to a home appliance (the second home appliance 200B in FIG. 7) that transmits the join request signal. The join response signal may be transmitted from the first home appliance 200A to the second home appliance 200B, for example, in a unicast manner. For example, when the account information of the first home appliance 200A and the second home appliance 200B are different, participation of the second home appliance 200B in the local network may be rejected. Alternatively, when the authentication information of the first home appliance 200A and the second home appliance 200B are not compatible with each other, participation of the second home appliance 200B in the local network may be rejected.

The second home appliance 200B may successfully participate in the local network by receiving a join response signal that approves participation in the local network.

The second home appliance 200B, which receives the join response signal approving participation in the local network, may generate a reconfiguration request signal requesting reconfiguration of a network topology thereof and transmit the reconfiguration request signal to the first home appliance 200A. The reconfiguration request signal may be transmitted from the second home appliance 200B to the first home appliance 200A in a unicast manner, for example.

The first home appliance 200A may generate a reconfiguration response signal confirming receipt of the reconfiguration request signal and transmit the reconfiguration response signal to the home appliance (the second home appliance 200B in FIG. 7) that transmits the reconfiguration request signal.

The second home appliance 200B, which receives the reconfiguration response signal, may generate a Wi-Fi score report signal thereof and transmit the Wi-Fi score report signal to the first home appliance 200A. The Wi-Fi score report signal may include network information of the second home appliance 200B. The network information (or Wi-Fi score) may be information about a Wi-Fi wireless network.

The network information may include i) information on a software AP of the second home appliance 200B that generated the Wi-Fi score report signal (hereinafter referred to as own (software) AP information), ii) AP information of a software AP of an access point or another home appliance that the second home appliance 200B currently and directly accesses via Wi-Fi (hereinafter referred to as connected AP information), and iii) AP information of a software AP of an access point and/or another home appliance that the second home appliance 200B does not currently and directly access but that are discovered nearby (hereinafter referred to as near AP information). However, when the second home appliance 200B is a home appliance that is not capable of performing a software AP function, the network information may not include the own AP information. Needless to say, when there are no access points or other home appliances discovered nearby, the network information may not include the near AP information.

The own software AP information may include the SSID and password information of the own software AP.

The connected AP information may include the SSID of the software AP of the access point or other home appliance that is currently and directly connected thereto via Wi-Fi, and information on the quality of a signal received from the access point or the other home appliance (e.g., signal strength (received signal strength indicator (RSSI) or a packet error rate (PER)). In some cases, the connected AP information may further include a password of the software AP of the access point or the other home appliance that is currently directly connected thereto via Wi-Fi.

The near AP information may include the SSID of a software AP of an access point or other home appliance discovered nearby, and information about the quality of a signal received from the access point or the other home appliance.

The first home appliance 200A may generate a Wi-Fi score report response signal indicating receipt of the Wi-Fi score report signal and transmit the Wi-Fi score report response signal to the second home appliance 200B.

Then, the first home appliance 200A may calculate the network topology for the second home appliance 200B by using network information in the Wi-Fi score report signal. In other words, the first home appliance 200A may determine which network topology it is appropriate for the second home appliance 200B to participate in the local network by using the network information.

For example, the quality of the Wi-Fi signal that is received from the first home appliance 200A by the second home appliance 200B may be higher than the quality of the Wi-Fi signal that is received from the access point 300 by the second home appliance 200B.

In this case, the first home appliance 200A may determine that the case in which the second home appliance 200B indirectly accesses the access point 300 through the first home appliance 200A is more appropriate than in the case in which the second home appliance 200B directly accesses the access point 300. Thus, the first home appliance 200A may generate a reconfiguration start request signal requesting configuration of a network topology in which the second home appliance 200B directly accesses the first home appliance 200A instead of directly accessing the access point 300 and transmit the reconfiguration start request signal to the second home appliance 200B. The reconfiguration start request signal may be transmitted from the first home appliance 200A to the second home appliance 200B, for example, in a unicast manner.

The second home appliance 200B, which receives the reconfiguration start request signal, may configure a network topology according to the reconfiguration start request signal, as shown in (7-2) of FIG. 7. The reconfiguration start request signal may include AP information (hereinafter referred to as target AP information) of a network node that the home appliance receiving the reconfiguration start request signal needs to directly access. Therefore, the second home appliance 200B may release a direct Wi-Fi connection link to the access point 300 based on the reconfiguration start request signal and form a direct Wi-Fi connection link to the first home appliance 200A.

The second home appliance 200B, which completes the configuration of the network topology according to the reconfiguration start request signal, may generate a reconfiguration start request response signal and transmit the reconfiguration start request response signal to the first home appliance 200A, and thus notify the first home appliance 200A of completion of the configuration of an own network topology.

The first home appliance 200A, which receives the reconfiguration start request response signal, may transmit a reconfiguration completion signal indicating that reconfiguration of the network topology of the second home appliance 200B is completed, to all network nodes within the local network, except for the access point 300 and itself, which is the host device. For example, the reconfiguration completion signal may be transmitted in a unicast manner.

As such, the access point 300 may form the local network with the first home appliance 200A and the second home appliance 200B.

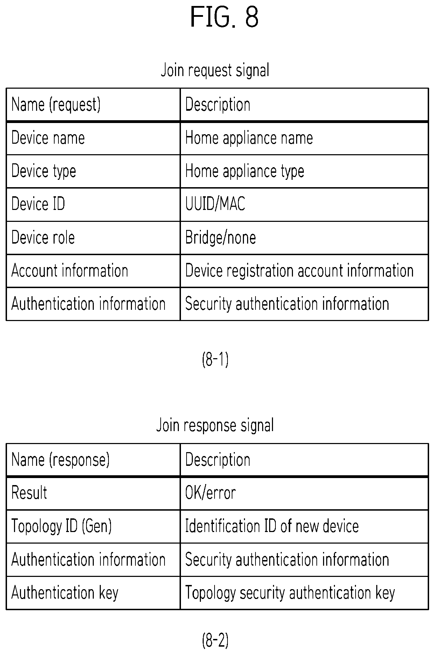

Hereinafter, the join request signal and the join response signal will be described in more detail with reference to FIG. 8. FIG. 8 shows an example of information to be included in a join request signal and a join request response signal, according to an aspect of the present disclosure.

As shown in (8-1) of FIG. 8, the join request signal is a signal in which a client device requests the host device to participate in the local network, and may include a device name, a device type, a device ID, a device role, account information, and authentication information. The join request signal may not necessarily include all of the information in (8-1) of FIG. 8 and may include at least part of the information. The join request signal may not have to include only the information in (8-1) of FIG. 8, but may also include other information.

The device name, the device type, the device ID, and the account information are the same as the above description, and thus a detailed description thereof will be omitted

The device role information may include role information as a network node of the home appliance transmitting the join request signal. The home appliance transmitting the join request signal may not be a host node. Accordingly, a role of the home appliance transmitting the join request signal may be either a bridge node or an end node (or a none node).

The authentication information is information about security authentication to be performed by the home appliance transmitting the join request signal.

As shown in (8-2) of FIG. 8, the join response signal is a signal in which the host device responds to the join request signal, and may include result information, a topology ID, authentication information, and an authentication key. The join response signal may not necessarily include all of the information in (8-2) of FIG. 8 and may include at least part of the information. The join response signal may not have to include only the information in (8-2) of FIG. 8, but may also include other information.

The result information may include information regarding whether the join response signal to the join request signal is validly generated. When an error occurs in generating the join response signal and the join response signal is invalid, the result information may further include information about the error.

The topology ID refers to identifier information for a separate network node to be used within the network topology. Whenever receiving join request signal, the host device may generate the corresponding topology ID for the home appliance that transmits the join request signal and grant the topology ID to the home appliance that transmits the join request signal. The host device may, needless to say, generate and maintain a topology ID therefor.

The authentication information is information about security authentication to be performed by the host device.

The authentication key may include information about an encryption key for security of signals to be transmitted and received after participation in the local network for network topology reconfiguration, or the like.

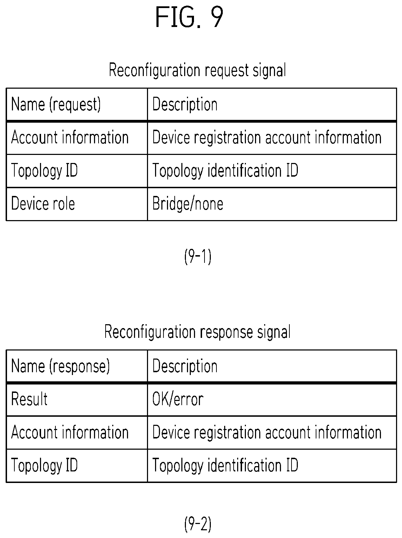

Hereinafter, with reference to FIG. 9, the reconfiguration request signal and the reconfiguration response signal will be described in more detail. FIG. 9 shows an example of information to be included in a reconfiguration request signal and a reconfiguration response signal, according to an aspect of the present disclosure.

As shown in (9-1) of FIG. 9, the reconfiguration request signal is a signal in which a client device requests reconfiguration of a network topology thereof from a host device in the local network to which the client device belongs, and may include account information, a topology ID, and device role information. The reconfiguration request signal may not necessarily include all of the information in (9-1) of FIG. 9 and may include at least part of the information. The reconfiguration request signal may not have to include only the information in (9-1) of FIG. 9, but may also include other information.

The account information is the same as the above description, and thus a detailed description thereof will be omitted.

The topology ID is a topology ID given to the client device.

The device role information may include role information as a network node of the client device transmitting the reconfiguration request signal. The client device transmitting the reconfiguration request signal may not be a host node. Accordingly, the role of the client device transmitting the reconfiguration request signal may be either a bridge node or an end node (or a none node).

As shown in (9-2) of FIG. 9, the reconfiguration response signal is a signal transmitted by the host device to the client device in response to the reconfiguration request signal, and may include result information, account information, and a topology ID. The reconfiguration response signal may not necessarily include all of the information in (9-2) of FIG. 9 and may include at least part of the information. The reconfiguration response signal may not have to include only the information in (9-2) of FIG. 9, but may also include other information.

The result information may include information regarding whether the reconfiguration response signal to the reconfiguration request signal is validly generated. When an error occurs in generating the reconfiguration response signal and the reconfiguration response signal is invalid, the result information may further include information about the error.

The account information is the same as the above description, and thus a detailed description thereof will be omitted.

The topology ID is a topology ID of the host device.

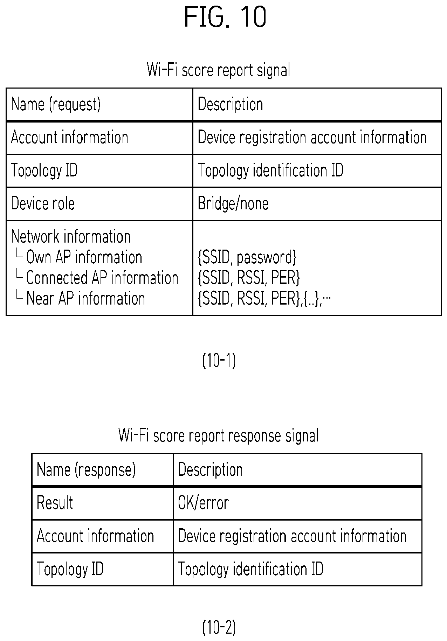

Hereinafter, with reference to FIG. 10, the Wi-Fi score report signal and the Wi-Fi score report response signal will be described in more detail. FIG. 10 shows an example of information to be included in a Wi-Fi score report signal and a Wi-Fi score report response signal, according to an aspect of the present disclosure.

As shown in (10-1) of FIG. 10, the Wi-Fi score report signal is a signal in which a client device reports information about a Wi-Fi wireless environment thereof to a host device in the local network to which the client device belongs, and may include account information, a topology ID, device role information, and network information. The Wi-Fi score report signal may not necessarily include all of the information in (10-1) of FIG. 10 and may include only at least part of the information. The Wi-Fi score report signal may not have to include only the information in (10-1) of FIG. 10, but may also include other information.

The account information is the same as the above description, and thus a detailed description thereof will be omitted.

The topology ID is a topology ID given to the client device.

The device role information may include role information as a network node of the client device transmitting the Wi-Fi score report signal. The client device transmitting the Wi-Fi score report signal may not be a host node. Accordingly, the role of the client device transmitting the Wi-Fi score report signal may be either a bridge node or an end node (or a none node).

The network information may be information about a Wi-Fi wireless network.

The network information may include i) own software AP information of a client device that generates the Wi-Fi score report signal, ii) connected AP information of a software AP of an access point or another device that the client device currently and directly accesses via Wi-Fi, and iii) near AP information of a software AP of an access point and/or another device that the client device does not currently and directly access but that are discovered nearby. However, when the client device is not capable of performing a software AP function, the network information may not include the own AP information. Needless to say, when there are no access points or other devices discovered nearby, the network information may not include the near AP information.

The own software AP information may include the SSID and password information of the own software AP.

The connected AP information may include the SSID of the software AP of the access point or another device that is currently and directly connected thereto via Wi-Fi, and information on the quality of a signal received from the access point or the other device (e.g., signal strength (received signal strength indicator (RSSI) or a packet error rate (PER)). In some cases, the connected AP information may further include a password of the software AP of the access point or the other device that is currently directly connected thereto via Wi-Fi.

The near AP information may include the SSID of a software AP of an access point or other devices discovered nearby, and information about the quality of a signal received from the access point or the other device.

As shown in (10-2) of FIG. 10, the Wi-Fi score report response signal is a signal transmitted by the host device to the client device in response to the Wi-Fi score report signal and may include result information, account information, and a topology ID. The Wi-Fi score report response signal may not necessarily include all of the information in (10-2) of FIG. 10 and may include at least part of the information. The Wi-Fi score report response signal may not have to include only the information in (10-2) of FIG. 10, but may also include other information.

The result information may include information regarding whether the Wi-Fi score report response signal to the Wi-Fi score report signal is validly generated. When an error occurs in generating the Wi-Fi score report response signal and the Wi-Fi score report response signal is invalid, the result information may further include information about the error.

The account information is the same as the above description, and thus a detailed description thereof will be omitted.

The topology ID is a topology ID of the host device.

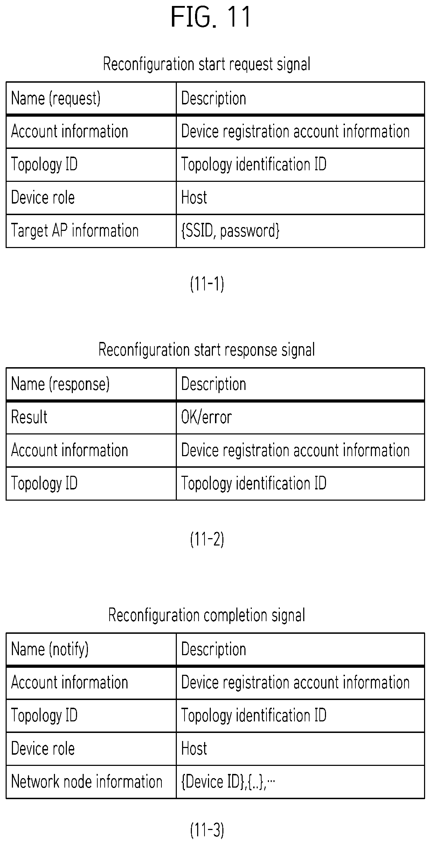

Hereinafter, with reference to FIG. 11, the reconfiguration start request signal, the reconfiguration start request response signal, and the reconfiguration completion signal will be described in more detail. FIG. 11 shows an example of information to be included in a reconfiguration start request signal, a reconfiguration start request response signal, and a reconfiguration completion signal, according to an aspect of the present disclosure.

As shown in (11-1) of FIG. 11, the reconfiguration start request signal is a signal in which a host device requests reconfiguration of a network topology from a client device in the local network to which the host device belongs to, and may include account information, a topology ID, device role information, and target AP information. The reconfiguration start request signal may not necessarily include all of the information in (11-1) of FIG. 11 and may include at least part of the information. The reconfiguration start request signal may not have to include only the information in (11-1) of FIG. 11, but may also include other information.

The account information is the same as the above description, and thus a detailed description thereof will be omitted.

The topology ID is a topology ID given to the host device.

The device role information may include role information as a network node of the host device.

The target AP information may include AP information of a network node to which the client device receiving the reconfiguration start request signal needs to directly connect.

As shown in (11-2) of FIG. 11, the reconfiguration start request response signal is a signal that is transmitted by a client device, which completes configuration of a network topology according to the reconfiguration start request signal, to the host device in response to reconfiguration start request signal, and may include result information, account information, and a topology ID. The reconfiguration start request response signal may not necessarily include all of the information in (11-2) of FIG. 11 and may include at least part of the information. The reconfiguration start request response signal may not have to include only the information in (11-2) of FIG. 11, but may also include other information.

The result information may include information regarding whether the reconfiguration start request response signal to the reconfiguration start request signal is validly generated. When an error occurs in generating the reconfiguration start request response signal and the reconfiguration start request response signal is invalid, the result information may further include information about the error.

The error may include a case in which reconfiguration of the network topology according to the reconfiguration start request signal fails.

The account information is the same as the above description, and thus a detailed description thereof will be omitted.

The topology ID is a topology ID of a client device that generates and transmits the reconfiguration start request response signal.

As shown in (11-3) of FIG. 11, the reconfiguration completion signal is a signal that the host device notifies to all network nodes in the local network except the access point and itself, which is the host device, that reconfiguration of the network topology is completed, and may include account information, a topology ID, device role information, and network node information. The reconfiguration completion signal may not necessarily include all of the information in (11-3) of FIG. 11 and may include at least part of the information. The reconfiguration completion signal may not have to include only the information in (11-3) of FIG. 11, but may also include other information.

The account information is the same as the above description, and thus a detailed description thereof will be omitted.

The topology ID is a topology ID given to the host device.

The device role information may include role information (i.e., host node) as a network node of the host device.

The network node information may include identification information (e.g., device ID, or SSID) of each of all network nodes participating in the local network (or the network topology). Accordingly, the home appliance that receives the reconfiguration completion signal may know which network node(s) are participating in the local network (or the network topology). The network node information may include not only identification information for all network nodes, but also a password for accessing each network node.

In the above, the case in which the access point 300 forms the local network with the first home appliance 200A and the second home appliance 200B by sequentially connecting the access point 300 to the first home appliance 200A and the second home appliance 200B through Wi-Fi communication has been described.

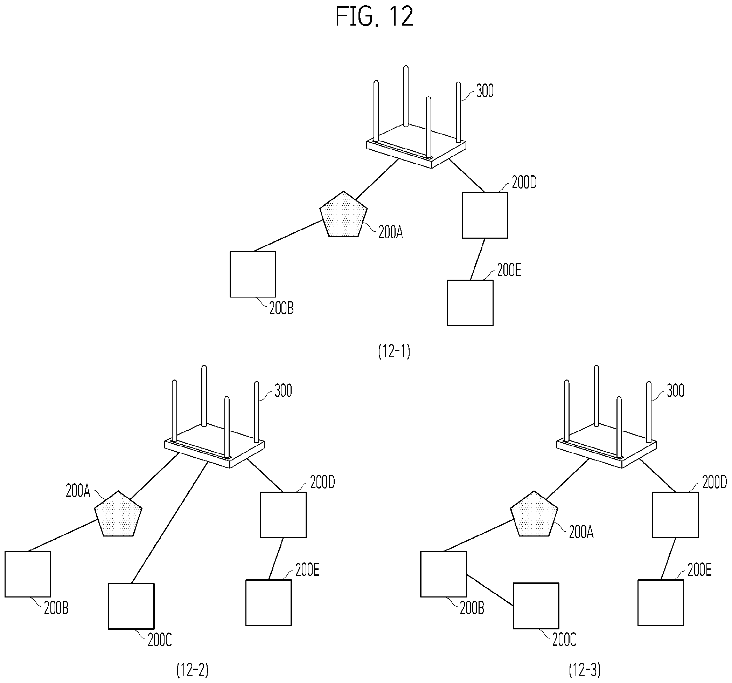

Hereinafter, with reference to FIG. 12, a process in which the third home appliance 200C as a new home appliance participates in the local network while the access point 300 forms the local network with the first home appliance 200A, the second home appliance 200B, the fourth home appliance 200D, and the fifth home appliance 200E will be described. FIG. 12 shows an example of a network topology, according to an aspect of the present disclosure.

As shown in (12-1) of FIG. 12, the first home appliance 200A and the fourth home appliance 200D may each be directly connected to the access point 300 through Wi-Fi communication.

The second home appliance 200B may be directly connected to the first home appliance 200A by using Wi-Fi communication. The second home appliance 200B may be connected to the access point 300 through the first home appliance 200A by using Wi-Fi communication. In other words, the first home appliance 200A may operate as a bridge device for the second home appliance 200B. The second home appliance 200B may operate as an end device.

The fifth home appliance 200E may be directly connected to the fourth home appliance 200D by using Wi-Fi communication. The fifth home appliance 200E may be connected to the access point 300 through the fourth home appliance 200D by using Wi-Fi communication. In other words, the fourth home appliance 200D may operate as a bridge device for the fifth home appliance 200E. The fifth home appliance 200E may operate as an end device.

As shown in (12-2) of FIG. 12, the third home appliance 200C may be directly connected to the access point 300 by using Wi-Fi communication. As described above with reference to FIG. 5, the third home appliance 200C may access the access point 300 via Wi-Fi through cooperation with the mobile terminal 100.

The third home appliance 200C that accesses the access point 300 transmits the discovery signal within the local network and receives the discovery response signal from the first home appliance 200A operating as the host device, and thus may recognize the first home appliance 200A as the host device within the local network.

The third home appliance 200C may generate a join request signal requesting that the third home appliance 200C participate in the local network and transmit the join request signal to the first home appliance 200A.

The first home appliance 200A may generate a join response signal that approves or rejects participation of the third home appliance 200C, which transmits the join request signal, in the local network in response to the join request signal and transmits the join response signal to the third home appliance 200C that transmits the join request signal. The join response signal may be transmitted from the first home appliance 200A to the third home appliance 200C, for example, in a unicast manner.

The third home appliance 200C may successfully participate in the local network by receiving a join response signal that approves participation in the local network.

The third home appliance 200C, which receives the join response signal approving participation in the local network, may generate a reconfiguration request signal requesting reconfiguration of a network topology thereof and transmit the reconfiguration request signal to the first home appliance 200A. The join request signal may be transmitted from the third home appliance 200C to the first home appliance 200A in a unicast manner, for example.

The first home appliance 200A may generate a reconfiguration response signal confirming receipt of the reconfiguration request signal and transmit the reconfiguration response signal to the third home appliance 200C that transmits the reconfiguration request signal.

The third home appliance 200C, which receives the reconfiguration response signal, may generate a Wi-Fi score report signal thereof and transmit the Wi-Fi score report signal to the first home appliance 200A. The Wi-Fi score report signal may include network information of the third home appliance 200C. The network information is information about the Wi-Fi wireless network and is the same as the above description, and thus a detailed description thereof will be omitted.

The first home appliance 200A may generate a Wi-Fi score report response signal indicating receipt of the Wi-Fi score report signal and transmit the Wi-Fi score report response signal to the third home appliance 200C.

Then, the first home appliance 200A may calculate the network topology for the third home appliance 200C by using network information in the Wi-Fi score report signal. In other words, the first home appliance 200A may determine which network topology it is appropriate for the third home appliance 200C to participate in the local network by using the network information.

For example, the quality of the Wi-Fi signal that the third home appliance 200C receives from the second home appliance 200B may be higher than the quality of the Wi-Fi signal that the third home appliance 200C receives from other network nodes.

In this case, the first home appliance 200A may determine that the case in which the third home appliance 200C directly accesses the second home appliance 200B is more appropriate than in the case in which the third home appliance 200C directly accesses the access point 300. Thus, the first home appliance 200A may generate a reconfiguration start request signal requesting that the second home appliance 200B configure a network topology that directly accesses the second home appliance 200B instead of directly accessing the access point 300 and transmit the reconfiguration start request signal to the third home appliance 200C. The reconfiguration start request signal may be transmitted from the first home appliance 200A to the third home appliance 200C, for example, in a unicast manner.

The third home appliance 200C, which receives the reconfiguration start request signal, may configure a network topology according to the reconfiguration start request signal, as shown in (12-3) of FIG. 12. The reconfiguration start request signal may include AP information (hereinafter referred to as target AP information) of a network node that the home appliance receiving the reconfiguration start request signal needs to directly access. Therefore, the third home appliance 200C may release a direct Wi-Fi connection link to the access point 300 based on the reconfiguration start request signal and form a direct Wi-Fi connection link to the second home appliance 200B.

The third home appliance 200C, which completes the configuration of the network topology according to the reconfiguration start request signal, may generate a reconfiguration start request response signal and transmit the reconfiguration start request response signal to the first home appliance 200A, and thus notify the first home appliance 200A of completion of the configuration of an own network topology.

The first home appliance 200A, which receives the reconfiguration start request response signal, may transmit a reconfiguration completion signal indicating that reconfiguration of the network topology of the third home appliance 200C is completed, to all network nodes within the local network, except for the access point 300 and itself, which is the host device. For example, the reconfiguration completion signal may be transmitted in a unicast manner.

As such, the access point 300 may form the local network with the first home appliance 200A to the fifth home appliance 200E.

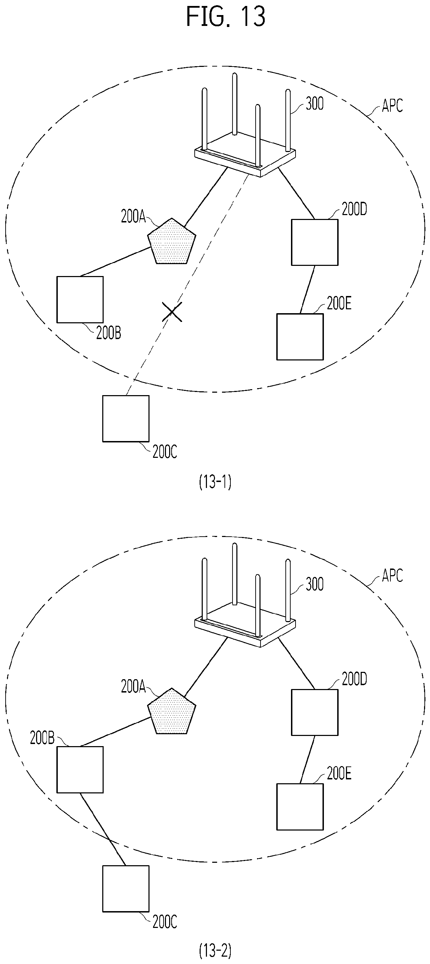

With reference to FIG. 12, the case in which the third home appliance 200C first accesses the access point 300 via Wi-Fi and then accesses the second home appliance 200B via Wi-Fi has been described. However, for example, the third home appliance 200C is far away from the access point 300 and may be located within a shadow area of the access point 300 (i.e., outside a communication coverage), and therefore it may not be possible for the third home appliance 200C to the first access the access point 300 via Wi-Fi. In this case, participation of the third home appliance 200C in the local network will be described with further reference to FIG. 13. FIG. 13 shows an example of a network topology, according to an aspect of the present disclosure.

As shown in (13-1) of FIG. 13, the third home appliance 200C may cooperate with the mobile terminal 100, that is, may attempt to access the access point 300 via Wi-Fi by using AP information, received from the mobile terminal 100, which is the same as previously described in relation to FIG. 5.

However, the third home appliance 200C is located within a shadow area of the access point 300 (i.e., outside a communication coverage (APC)), Wi-Fi connection to the access point 300 may fail.

Then, the third home appliance 200C may notify the mobile terminal 100 of Wi-Fi connection failure to the access point 300, and receive software AP information of other home appliance(s) in the local network from the mobile terminal 100. That is, the third home appliance 200C may know which home appliance(s) exist in the local network and the software AP information for each of the home appliance(s) through the mobile terminal 100.

The third home appliance 200C may autonomously search for the software AP of the surrounding device(s) to identify near AP information.

The third home appliance 200C may identify a first-priority device that belongs to other home appliance(s) within the local network but has the highest signal quality among surrounding device(s). FIG. 13 shows an example in which the first-priority device is the second home appliance 200B.

Therefore, as shown in (13-2) of FIG. 13, the third home appliance 200C may attempt to access the second home appliance 200B through Wi-Fi by using the software AP information of the second home appliance 200B and succeed.

When the third home appliance 200C fails to access the second home appliance 200B via Wi-Fi, the third home appliance 200C may identify a next-priority device that belongs to other home appliance(s) within the local network but has next highest signal quality among the surrounding device(s) and attempt to access the next-priority device via Wi-Fi by using the software AP of the next-priority device.

As described above, after the third home appliance 200C accesses the second home appliance 200B, the third home appliance 200C requests the host device, the first home appliance 200A, to participate in the local network and requests network topology reconfiguration thereof.

As such, even though the third home appliance 200C is located outside a communication coverage (APC) of the access point, the third home appliance 200C may still participate in the local network as long as there is a device already participating in the local network among the devices that are discovered around the third home appliance 200C.

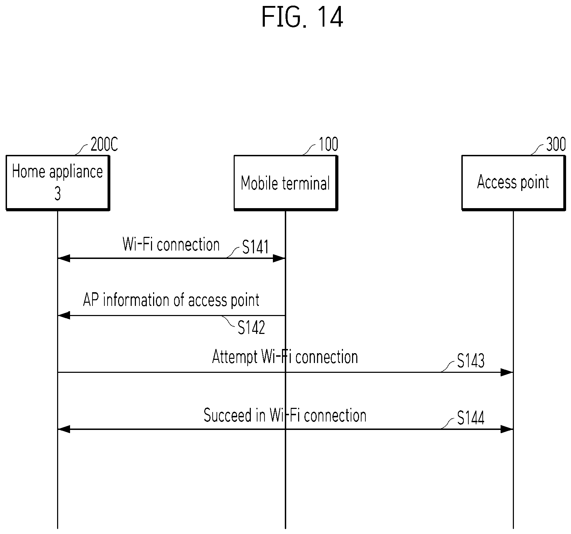

Hereinafter, with further reference to FIG. 14, a process in which the third home appliance 200C, a new home appliance, accesses the access point 300 via Wi-Fi through the mobile terminal 100 will be described. FIG. 14 is a flowchart of a case in which a home appliance accesses an access point via Wi-Fi, according to an aspect of the present disclosure.

When the third home appliance 200C has never accessed the access point 300 via Wi-Fi communication before, the third home appliance 200C may access the mobile terminal 100 via Wi-Fi communication [S141].

When the third home appliance 200C accesses the mobile terminal 100 via Wi-Fi, the third home appliance 200C may receive AP information of the access point 300 from the mobile terminal 100 [S142], which is the same as previously described with reference to FIG. 5.

The third home appliance 200C may attempt to access the access point 300 via Wi-Fi by using the received AP information and succeed.

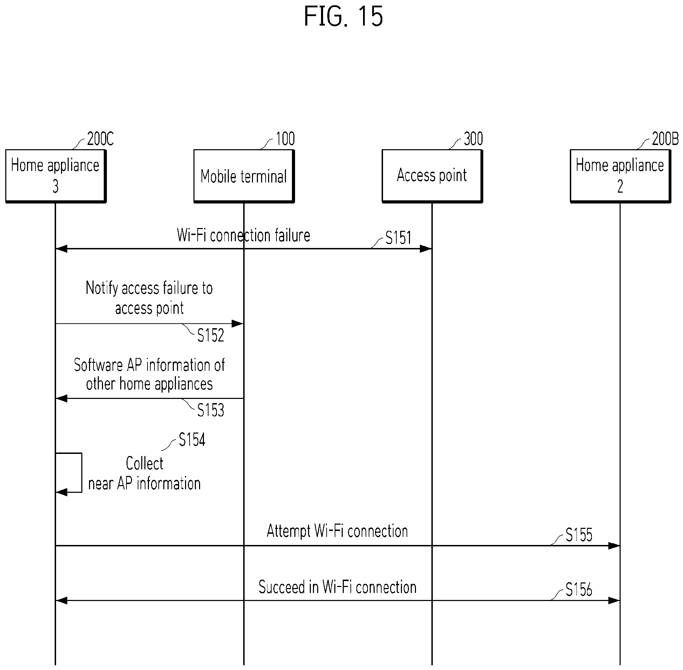

However, for example, the third home appliance 200C is far away from the access point 300 and may be located within a shadow area of the access point 300 (i.e., outside a communication coverage (APC)), and therefore it may not be possible for the third home appliance 200C to the first access the access point 300 via Wi-Fi. In this case, participation of the third home appliance 200C in the local network will be described with further reference to FIG. 15. FIG. 15 is a flowchart of a case in which one home appliance accesses another home appliance via Wi-Fi, according to an aspect of the present disclosure.

As described above, the third home appliance 200C is located within a shadow area of the access point 300 (i.e., outside a communication coverage (APC)), Wi-Fi connection to the access point 300 may fail [S 151].

Then, the third home appliance 200C may notify the mobile terminal 100 of Wi-Fi connection failure to the access point 300 [5152].

The third home appliance 200C may receive software AP information of other home appliance(s) in the local network from the mobile terminal 100 [S153]. That is, the third home appliance 200C may know which home appliance(s) exist in the local network and the software AP information for each of the home appliance(s) through the mobile terminal 100.

The third home appliance 200C may autonomously search for the software AP of the surrounding device(s) to identify near AP information [S154].

The third home appliance 200C may attempt to access the second home appliance 200B as a first-priority device that belongs to other home appliance(s) within the local network but has the highest signal quality among surrounding device(s) via Wi-Fi by using software AP information of the second home appliance 200B in the near AP information [S155 and S156].

As such, even though the third home appliance 200C is located outside a communication coverage (APC) of the access point, the third home appliance 200C may still participate in the local network as long as there is a device already participating in the local network among the devices that are discovered around the third home appliance 200C.

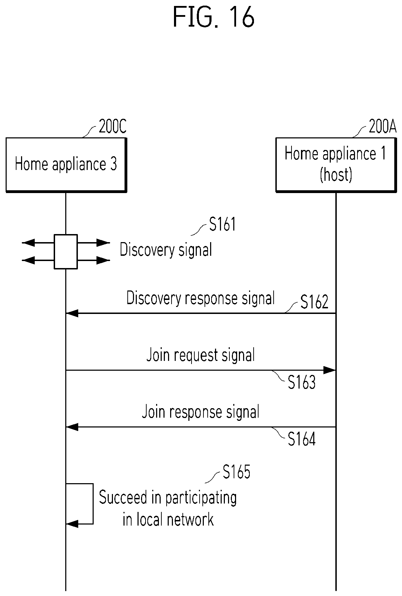

A process of requesting participation in the local network when the third home appliance 200C accesses the access point 300 or the second home appliance 200B via Wi-Fi will be described with further reference to FIG. 16. FIG. 16 is a flowchart of a case in which a home appliance participating in a local network, according to an aspect of the present disclosure.

When Wi-Fi connection to the access point 300 or the second home appliance 200B is successful, the third home appliance 200C may generate a discovery signal to detect whether a host device exists in the local network formed by the access point 300 and transmit the discovery signal within the local network [S161]. The discovery signal may be transmitted within the local network in a multicast manner.

The first home appliance 200A exists as the host device in the local network, and thus the third home appliance 200C may receive a discovery response signal from the first home appliance 200A in response to the discovery signal [S162].

The third home appliance 200C may generate a join request signal requesting the third home appliance 200C to participate in the local network (or the network topology) and transmit the join request signal to the first home appliance 200A [5163].

The third home appliance 200C may receive a join response signal that approves or rejects participation of the third home appliance 200C in the local network, from the first home appliance 200A [5164].

The third home appliance 200C may successfully participate in the local network by receiving a join response signal that approves participation in the local network [S65].

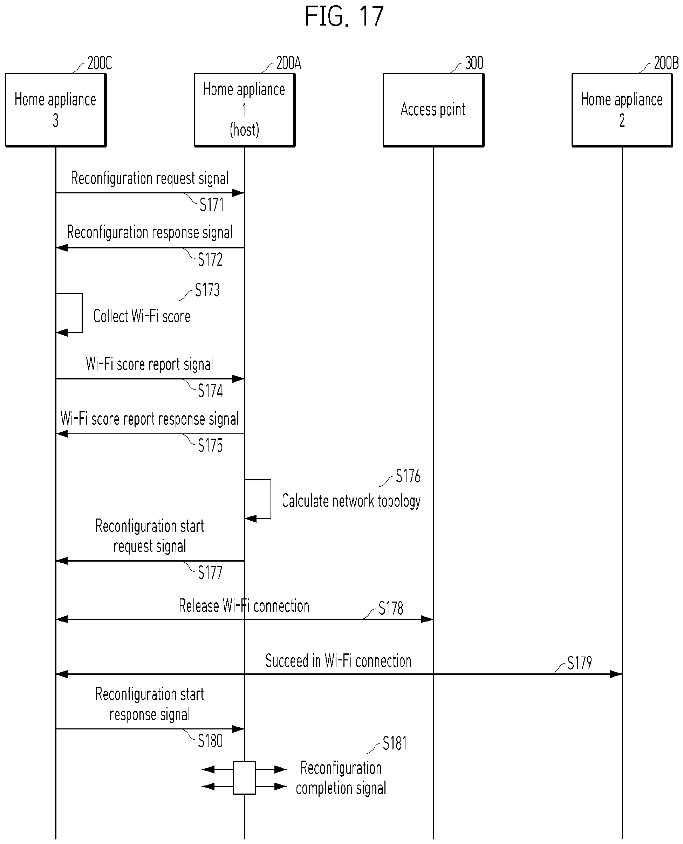

Hereinafter, a process of configuring a network topology for the third home appliance 200C, which successfully participated in the local network, will be described with further reference to FIG. 17. FIG. 17 is a flowchart of a case in which a network topology for a home appliance participating in a local network is configured, according to an aspect of the present disclosure.

The third home appliance 200C, which receives the join response signal approving participation in the local network, may generate a reconfiguration request signal requesting reconfiguration of a network topology thereof and transmit the reconfiguration request signal to the first home appliance 200A as the host device [S171].

The first home appliance 200A may generate a reconfiguration response signal confirming receipt of the reconfiguration request signal and transmit the reconfiguration response signal to the third home appliance 200C that transmits the reconfiguration request signal [5172].

The third home appliance 200C, which receives the reconfiguration response signal, may collect a Wi-Fi score thereof [S 173]. The Wi-Fi score may be network information about a wireless network of the third home appliance 200C.

The third home appliance 200C may generate a Wi-Fi score report signal based on the collected Wi-Fi score and transmit the Wi-Fi score report signal to the first home appliance 200A [5174].

The first home appliance 200A may generate a Wi-Fi score report response signal indicating receipt of the Wi-Fi score report signal and transmit the Wi-Fi score report response signal to the third home appliance 200C [S175].

Then, the first home appliance 200A may calculate the network topology for the third home appliance 200C by using network information in the Wi-Fi score report signal [5176]. In other words, the first home appliance 200A may determine which network topology it is appropriate for the third home appliance 200C to participate in the local network by using the network information.

For example, the quality of the Wi-Fi signal that is received from the second home appliance 200B by the third home appliance 200C may be higher than the quality of the Wi-Fi signal that is received from other network nodes by the third home appliance 200C.

In this case, the first home appliance 200A may determine that the case in which the third home appliance 200C directly accesses the second home appliance 200B is more appropriate than in the case in which the third home appliance 200C directly accesses the access point 300.

Thus, the first home appliance 200A may generate a reconfiguration start request signal requesting configuration of a network topology in which the third home appliance 200C directly accesses the second home appliance 200B instead of directly accessing the access point 300 and transmit the reconfiguration start request signal to the third home appliance 200C [5177].

The third home appliance 200C may release a direct Wi-Fi connection link to the access point 300 based on the reconfiguration start request signal and form a direct Wi-Fi connection link to the second home appliance 200B [S178 and S179].

The third home appliance 200C, which completes the configuration of the network topology according to the reconfiguration start request signal, may generate a reconfiguration start request response signal and transmit the reconfiguration start request response signal to the first home appliance 200A, and thus notify the first home appliance 200A of completion of the configuration of an own network topology [S180].

The first home appliance 200A, which receives the reconfiguration start request response signal, may transmit a reconfiguration completion signal indicating that reconfiguration of the network topology of the third home appliance 200C is completed, to all network nodes within the local network, except for the access point 300 and itself, which is the host device [S 181].

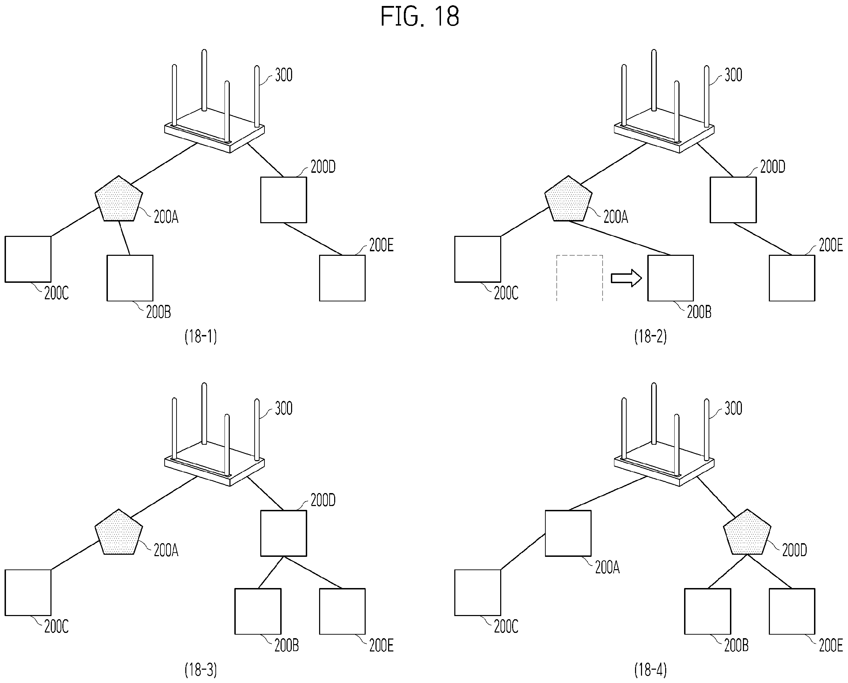

In the above, reconfiguration of the network topology for the new home appliance when a new home appliance newly participates in the local network has been described. However, the network topology may be reconfigured whenever a network topology reconfiguration event occurs, even for a plurality of home appliances already participating in the local network. The network topology reconfiguration event may include at least one of arrival of a certain period, arrival of a certain time zone, reduction in communication data amount, or a user command. As the network topology for the plurality of home appliances is reconfigured, the host role may be transferred to another home appliance, which will be explained further with reference to FIG. 18. FIG. 18 shows an example of a network topology, according to an aspect of the present disclosure.

As shown in (18-1) of FIG. 18, the first home appliance 200A and the fourth home appliance 200D may each directly access the access point 300 through Wi-Fi communication. The second home appliance 200B and the third home appliance 200C may each access the first home appliance 200A through Wi-Fi communication. The fifth home appliance 200E may directly access the fourth home appliance 200D through Wi-Fi communication.

However, as shown in (18-2) of FIG. 18, it is assumed that the second home appliance 200B moves closer to the fourth home appliance 200D while moving away from the first home appliance 200A. The second home appliance 200B may still directly access the first home appliance 200A through Wi-Fi communication. However, the second home appliance 200B moves away from the first home appliance 200A, and thus Wi-Fi communication between the second home appliance 200B and the first home appliance 200A may not be as smooth as before moving.

In this case, the network topology reconfiguration event may occur.

The network topology reconfiguration event may include at least one of i) arrival of a certain period (e.g., arrival of a period of 24 hours), ii) arrival of a certain time zone (e.g., arrival of night time when communication data volume is generally low), iii) arrival of a time point when a total amount of communication data within the local network decreases to a certain level or less, or iv) receiving a user command desiring to reconfigure the network topology input through one of the mobile terminal 100 or the plurality of home appliances.

Then, the first home appliance 200A operating as the host device may transmit the Wi-Fi score request signal to all home appliances in the local network (i.e., the second home appliance 200B, the third home appliance 200C, the fourth home appliance 200D, and the fifth home appliance 200E) except for the first home appliance 200A. The Wi-Fi score request signal may be transmitted, for example, in a unicast manner.

Each of all the home appliances that receives the Wi-Fi score request signal may collect an own Wi-Fi score, generate a Wi-Fi score response signal based on the collected Wi-Fi score, and transmit the Wi-Fi score response signal to the first home appliance 200A.

The Wi-Fi score response signal may include network information of each home appliance. The network information may be information about a Wi-Fi wireless network.

The network information includes i) own software AP information of each home appliance that generates the Wi-Fi score response signal, ii) connected AP information of a software AP of an access point or another home appliance that each home appliance currently and directly accesses via Wi-Fi, and iii) near AP information of a software AP of an access point and/or another home appliance that each home appliance currently and directly accesses but that are discovered nearby. However, the network information of home appliances that are not capable of performing a software AP function may not include the own AP information. Needless to say, when there are no access points or other home appliances discovered nearby, the network information may not include the near AP information.

The own software AP information may include an SSID and password information of an own software AP.

The connected AP information may include the SSID of the software AP of the access point or other home appliance that is currently and directly connected thereto via Wi-Fi, and information on the quality of a signal received from the access point or the other home appliance (e.g., signal strength (received signal strength indicator (RSSI) or a packet error rate (PER)). In some cases, the connected AP information may further include a password of the software AP of the access point or the other home appliance that is currently directly connected thereto via Wi-Fi.

The near AP information may include the SSID of a software AP of an access point or other home appliance discovered nearby, and information about the quality of a signal received from the access point or the other home appliance.

Then, the first home appliance 200A may calculate the network topology for each of all home appliances in the local network by using network information in the Wi-Fi score response signal received from each home appliance and network information (i.e., Wi-Fi score) of the first home appliance 200A. That is, the first home appliance 200A may determine which network topology it is appropriate for each of all home appliances in the local network to participate in the local network by using the network information. When the network topology is calculated, not only a wireless environment (e.g., signal quality) between network nodes is considered, but also the number of home appliances (links) directly connected to the access point 300 and a lower end of one bridge device and the number of directly connected home appliances (or links) may also be considered.

The first home appliance 200A may transmit the reconfiguration start request signal to at least one home appliance that is determined to require reconfiguration of the network topology.

In FIG. 18, it is assumed that the only home appliance that is determined to require reconfiguration of the network topology is the second home appliance 200B.

For example, the quality of the Wi-Fi signal that is received from the fourth home appliance 200D by the second home appliance 200B may be higher than the quality of the Wi-Fi signal that is received from other network nodes by the second home appliance 200B.

In this case, the first home appliance 200A, currently in the host role, may determine that the case in which the second home appliance 200B directly accesses the fourth home appliance 200D is more appropriate than the case in which the second home appliance 200B directly accesses the first home appliance 200A. Therefore, the first home appliance 200A may generates a reconfiguration start request signal requesting that the second home appliance 200B configure a network topology that directly accesses the fourth home appliance 200D instead of directly accessing the first home appliance 200A and transmit the reconfiguration start request signal to the second home appliance 200B.

The second home appliance 200B, which receives the reconfiguration start request signal, may configure a network topology according to the reconfiguration start request signal, as shown in (18-3) of FIG. 18. The reconfiguration start request signal may include AP information (hereinafter referred to as target AP information) of a network node that the home appliance receiving the reconfiguration start request signal needs to directly access. Therefore, the second home appliance 200B may release a Wi-Fi link to the first home appliance 200A based on the reconfiguration start request signal and form a direct Wi-Fi link to the fourth home appliance 200D.

The second home appliance 200B, which completes the configuration of the network topology according to the reconfiguration start request signal, may generate a reconfiguration start request response signal and transmit the reconfiguration start request response signal, and thus notify the first home appliance 200A of completion of the configuration of an own network topology.

The first home appliance 200A, which receives the reconfiguration start request response signal, may transmit a reconfiguration completion signal indicating that reconfiguration of the network topology of the second home appliance 200B is completed, to all network nodes within the local network, except for the access point 300 and itself, which is the host device.

When reconfiguration of the network topology for all home appliances in the local network is completed, the first home appliance 200A may determine whether to transfer or maintain the host role based on grounds for determination below.

For example, as described above with reference to FIG. 4, when only one home appliance exists in the local network, the one home appliance may assume the host role.

When there is a plurality of home appliances in the local network, a bridge device among the plurality of home appliances may assume the host role. When there is no bridge device among the plurality of home appliances, a home appliance with a high quality of communication signal with the access point may assume the host role.

When there is a plurality of bridge devices among the plurality of home appliances, the quality of the communication signal between each bridge device and the access point, the number of other home appliances connected to a lower end of each bridge device, and the like may be considered, and one of the plurality of bridge devices may assume the host role. For example, when the quality of communication signals between each bridge device and the access point is the same, the bridge device with the largest number of other home appliances connected to the lower end may assume the host role.

Based on such grounds for determination, the first home appliance 200A may determine that it is desirable for the first home appliance 200A to assume the host role.

Therefore, the first home appliance 200A may generate a host change request signal requesting the fourth home appliance 200D to receive transfer of the host role and transmit the host change request signal to the fourth home appliance 200D.

The fourth home appliance 200D, which receives the host change request signal, may set itself as a host device, generate a host change response signal, and transmit the host change response signal to the first home appliance 200A.

The first home appliance 200A, which receives the host change response signal, may release setting of the host device therefor. In other words, the first home appliance 200A may operate as a client device.

Therefore, as shown in (18-4) of FIG. 18, the host role may be transferred from the first home appliance 200A to the fourth home appliance 200D.

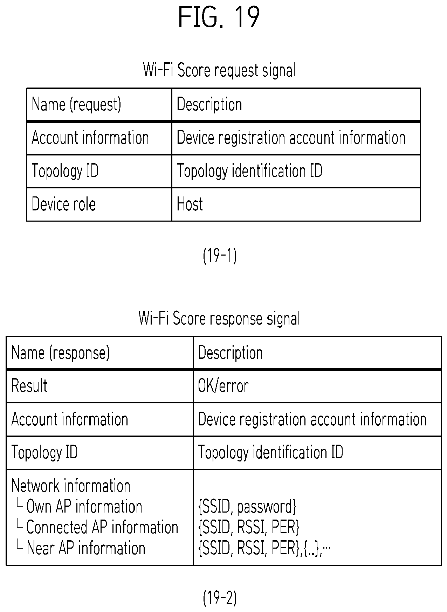

Hereinafter, with reference to FIG. 19, the Wi-Fi score request signal and the Wi-Fi score response signal will be described in more detail. FIG. 19 shows an example of information to be included in a Wi-Fi score request signal and a Wi-Fi score response signal, according to an aspect of the present disclosure.

As shown in (19-1) of FIG. 19, the Wi-Fi score request signal is a signal that requests the host device to collect and inform each client device of the Wi-Fi score of each client device and may include account information, a topology ID, and device role information. The Wi-Fi score report request signal may not necessarily include all of the information in (19-1) of FIG. 19, but may include at least part of the information. The Wi-Fi score request signal may not have to include only the information in (19-1) of FIG. 19, but may also include other information.

The account information is the same as the above description, and thus a detailed description thereof will be omitted.

The topology ID is a topology ID given to the host device.

The device role information may include role information (i.e., host node) as a network node of the host device.

As shown in (19-2) of FIG. 19, the Wi-Fi score response signal is a response to the Wi-Fi score request signal, is a signal in which each client device reports information about a Wi-Fi wireless environment thereof to a host device in a local network to which the client device belongs, and may include result information, account information, a topology ID, and network information. The Wi-Fi score response signal may not necessarily include all of the information in (19-2) of FIG. 19, but may include at least part of the information. The Wi-Fi score response signal may not have to include only the information in (19-2) of FIG. 19, but may also include other information.

The result information may include information regarding whether the Wi-Fi score response signal to the Wi-Fi score request signal is validly generated. When an error occurs in generating the Wi-Fi score response signal and the Wi-Fi score response signal is invalid, the result information may further include information about the error.

The account information is the same as the above description, and thus a detailed description thereof will be omitted.

The topology ID is a topology ID given to the client device.

The network information may be information about a Wi-Fi wireless network.

The network information may include i) own software AP information of a client device that generates the Wi-Fi score report signal, ii) connected AP information of a software AP of an access point or another device that the client device currently and directly accesses via Wi-Fi, and iii) near AP information of a software AP of an access point and/or another device that the client device does not currently and directly access but that are discovered nearby. However, when the client device is not capable of performing a software AP function, the network information may not include the own AP information. Needless to say, when there are no access points or other devices discovered nearby, the network information may not include the near AP information.

The own software AP information may include the SSID and password information of the own software AP.

The connected AP information may include the SSID of the software AP of the access point or another device that is currently and directly connected thereto via Wi-Fi, and information on the quality of a signal received from the access point or the other device (e.g., signal strength (received signal strength indicator (RSSI) or a packet error rate (PER)). In some cases, the connected AP information may further include a password of the software AP of the access point or the other device that is currently directly connected thereto via Wi-Fi.

The near AP information may include the SSID of a software AP of an access point or other devices discovered nearby, and information about the quality of a signal received from the access point or the other device.

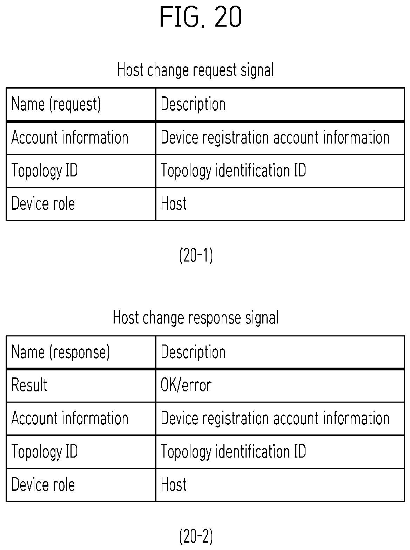

Hereinafter, with reference to FIG. 20, the host change request signal and the host change response signal will be described in more detail. FIG. 20 shows an example of information to be included in a host change request signal and a host change response signal, according to an aspect of the present disclosure.

As shown in (20-1) of FIG. 20, the host change request signal is a signal that requests the host device to receive transfer of a hole role from one client device and may include account information, a topology ID, and device role information. The host change request signal may not necessarily include all of the information in (20-1) of FIG. 20, but may include at least part of the information. The host change request signal may not have to include only the information in (20-1) of FIG. 20, but may also include other information.

The account information is the same as the above description, and thus a detailed description thereof will be omitted.

The topology ID is a topology ID given to the host device.

The device role information may include role information (i.e., host node) as a network node of the host device
As shown in (20-2) of FIG. 20, the host change response signal is a signal indicating that the client device that receives the host change request signal sets itself as a new host device, and may include result information, account information, a topology ID, and device role information. The host change response signal may not necessarily include all of the information in (20-2) of FIG. 20, but may include at least part of the information. The host change response signal may not have to include only the information in (20-2) of FIG. 20, but may also include other information.

The result information may include information regarding whether the host change response signal is validly generated. When an error occurs in generating the host change response signal and the host change response signal is invalid, the result information may further include information about the error.

The account information is the same as the above description, and thus a detailed description thereof will be omitted.

The topology ID is a topology ID given to the client device that receives the host change request signal.

The device role information may include role information (i.e., host node) of a network node that becomes a new host device.

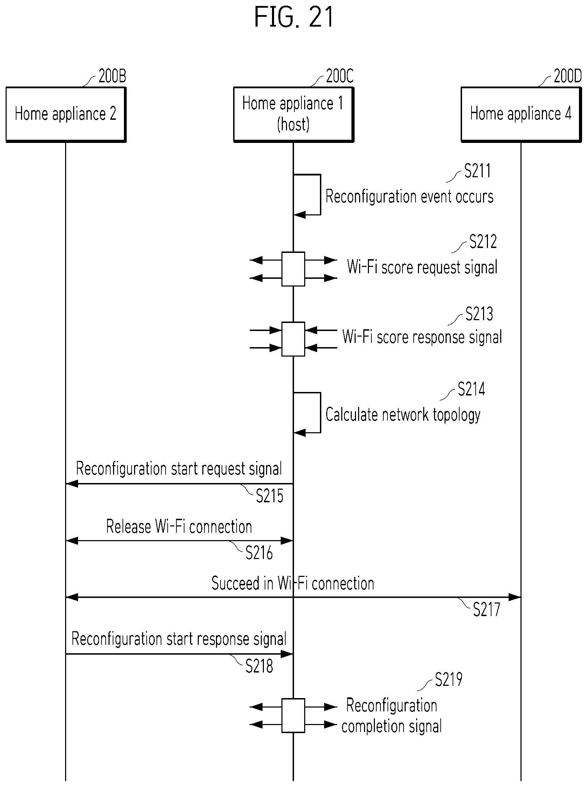

Hereinafter, with further reference to FIG. 21, a process of reconfiguring a network topology for a plurality of home appliances already participating in the local network will be described. FIG. 21 is a flowchart of a case in which a network topology for a plurality of home appliances is reconfigured, according to an aspect of the present disclosure.

The first home appliance 200A operating as the host device may determine that a network topology reconfiguration event occurs [S211].

The network topology reconfiguration event may include at least one of i) arrival of a certain period (e.g., arrival of a period of 24 hours), ii) arrival of a certain time zone (e.g., arrival of night time when communication data volume is generally low), iii) arrival of a time point when a total amount of communication data within the local network decreases below a certain level, or iv) receiving a user command desiring to reconfigure the network topology input through one of the mobile terminal 100 or the plurality of home appliances.

Then, the first home appliance 200A may transmit the Wi-Fi score request signal to all client devices in the local network [S212]. The Wi-Fi request signal may be transmitted from the host device, for example, in a unicast manner.

Each client device receiving the Wi-Fi score request signal may collect an own Wi-Fi score, generate a Wi-Fi score response signal based on the collected Wi-Fi score, and transmit the Wi-Fi score response signal to the first home appliance 200A [S213].

The first home appliance 200A may calculate the network topology for each of all home appliances in the local network by using network information in the Wi-Fi score response signal received from each client device and network information (i.e., Wi-Fi score) of the first home appliance 200A [S214]. That is, the first home appliance 200A may determine which network topology it is appropriate for each of all home appliances in the local network to participate in the local network by using the network information. All of the home appliances may include a host device and all client devices in the local network. When the network topology is calculated, not only a wireless environment (e.g., signal quality) between network nodes is considered, but also the number of home appliances (links) directly connected to the access point 300 and a lower end of one bridge device and the number of directly connected home appliances (or links) may also be considered.

The first home appliance 200A may transmit the reconfiguration start request signal to at least one home appliance that is determined to require reconfiguration of the network topology [S215]. In FIG. 21, it is assumed that the only home appliance that is determined to require reconfiguration of the network topology is the second home appliance 200B.

For example, the quality of the Wi-Fi signal that is received from the fourth home appliance 200D by the second home appliance 200B may be higher than the quality of the Wi-Fi signal that is received from other network nodes by the second home appliance 200B.

In this case, the first home appliance 200A, currently in the host role, may determine that the case in which the second home appliance 200B directly accesses the fourth home appliance 200D is more appropriate than the case in which the second home appliance 200B directly accesses the first home appliance 200A. Therefore, the first home appliance 200Amay generates a reconfiguration start request signal requesting that the second home appliance 200B configure a network topology that directly accesses the fourth home appliance 200D instead of directly accessing the first home appliance 200A and transmit the reconfiguration start request signal to the second home appliance 200B.

The second home appliance 200B, which receives the reconfiguration start request signal, may configure a network topology according to the reconfiguration start request signal [S216 and S217]. The reconfiguration start request signal may include AP information (hereinafter referred to as target AP information) of a network node that the home appliance receiving the reconfiguration start request signal needs to directly access. Therefore, the second home appliance 200B may release a Wi-Fi link to the first home appliance 200A based on the reconfiguration start request signal and form a direct Wi-Fi link to the fourth home appliance 200D.

The second home appliance 200B, which completes the configuration of the network topology according to the reconfiguration start request signal, may generate a reconfiguration start request response signal and transmit the reconfiguration start request response signal, and thus notify the first home appliance 200A of completion of the configuration of an own network topology [S218].

The first home appliance 200A, which receives the reconfiguration start request response signal, may transmit a reconfiguration completion signal indicating that reconfiguration of the network topology of the second home appliance 200B is completed, to all network nodes within the local network, except for the access point 300 and itself, which is the host device.

When it is determined in operation S214 that a plurality of home appliances require reconfiguration of the network topology, operations S215 to S218 may be repeatedly performed sequentially, starting from the home appliance at the lowest level in the network topology. For example, operations S215 to S218 may be performed for the home appliance at the lowest level in the network topology and then may be performed for the home appliance at the new priority level. Operation S219 may be performed after operations S215 to S218 are completed for the plurality of home appliances.

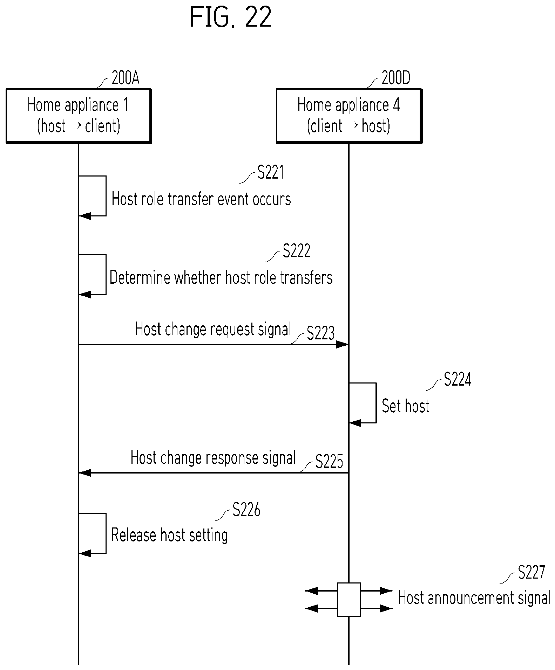

Hereinafter, with further reference to FIG. 22, a transfer process of a host role between two home appliances will be described. FIG. 22 is a flowchart of a case in which a host role is transferred between two home appliances, according to an aspect of the present disclosure.

The first home appliance 200A, currently assumes the host role, may determine that a host role transfer event occurs [S221].

The host role transfer event may include at least one of i) completion of reconfiguration of the network topology, or ii) receipt of a user command desiring to transfer the host role input through one of the mobile terminal 100 or the plurality of home appliances.

When the host role transfer event occurs, the first home appliance 200A may determine whether to transfer or maintain the host role based on grounds for determination below [S222].

For example, as described above with reference to FIG. 4, when only one home appliance exists in the local network, the one home appliance may assume the host role.

When there is a plurality of home appliances in the local network, a bridge device among the plurality of home appliances may assume the host role. When there is no bridge device among the plurality of home appliances, a home appliance with a high quality of communication signal with the access point may assume the host role.

When there is a plurality of bridge devices among the plurality of home appliances, the quality of the communication signal between each bridge device and the access point, the number of other home appliances connected to a lower end of each bridge device, and the like may be considered, and one of the plurality of bridge devices may assume the host role. For example, when the quality of communication signals between each bridge device and the access point is the same, the bridge device with the largest number of other home appliances connected to the lower end may assume the host role.

However, when a home appliance that is supposed to newly assume the host role is selected in the user command desiring to transfer the host role, operation S222 may be omitted.

When the first home appliance 200A determines that it is desirable for the fourth home appliance 200D to assume the host role, or when a user wishes for the fourth home appliance 200D to newly assume the host role through the user command, the first home appliance 200A may generate a host change request signal requesting the fourth home appliance 200D to receive transfer of the host role and transmit the host change request signal to the fourth home appliance 200D [S223].

The fourth home appliance 200D, which receives the host change request signal, may set itself as a host device, generate a host change response signal, and transmit the host change response signal to the first home appliance 200A [S224 and S225].

The first home appliance 200A, which receives the host change response signal, may release setting of the host device therefor [S226]. In other words, the first home appliance 200A may operate as a client device.

Therefore, the host role may be transferred from the first home appliance 200A to the fourth home appliance 200D.

The fourth home appliance 200D as a new host device may generate a host announcement signal to notify that the fourth home appliance 200D becomes a host device and transmit the host announcement signal to each client device in the local network [S227].

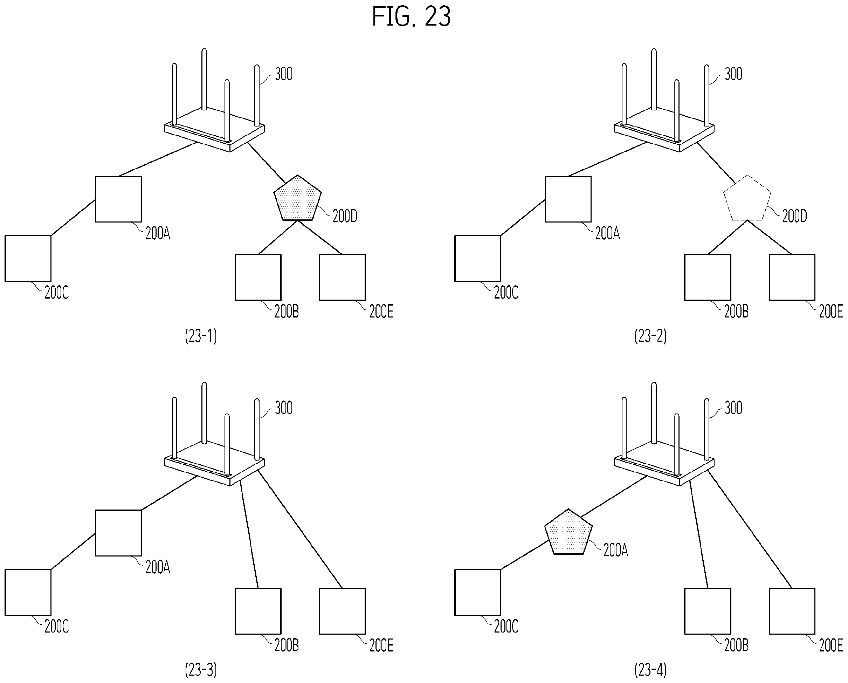

Hereinafter, with reference to FIG. 23, a process in which a host role is transferred to another home appliance in the local network when a home appliance operating as a host device in the local network stops participating in the local network due to power turn-off, malfunction, and the like while maintaining the host role will be described. FIG. 23 shows an example of a network topology, according to an aspect of the present disclosure.

As shown in (23-1) of FIG. 23, the first home appliance 200A and the fourth home appliance 200D may each be directly connected to the access point 300 through Wi-Fi communication. The third home appliance 200C may be directly connected to the first home appliance 200A through Wi-Fi communication. The second home appliance 200B and the fifth home appliance 200E may each be directly connected to the fourth home appliance 200D through Wi-Fi communication.

The fourth home appliance 200D, operating as the host device, may periodically generate a host alive signal indicating that the fourth home appliance 200D itself currently operates as a host device and may transmit the host alive signal to each client device in the local network, that is, the second home appliance 200B, the third home appliance 200C, and the fifth home appliance 200E. The host alive signal may be transmitted from the host device to each client device, for example, in a unicast manner.

The host alive signal may include information regarding an expiration time. The expiration time is updated whenever a new host alive signal is periodically generated. The length of time from a point of reception of the host alive signal to a point of expiration in the received host alive signal is greater than a time length of the period. Accordingly, each client device that periodically receives the host alive signal may know that the host device performs the host role until the expiration time of the most recently received host alive signal.

However, as shown in (23-2) of FIG. 23, the fourth home appliance 200D may stop participating in the local network due to power turn-off, malfunction, and the like while maintaining the host role.

Then, the second home appliance 200B and the fifth home appliance 200E, which are directly connected to the fourth home appliance 200D through Wi-Fi communication, may no longer connect directly to the fourth home appliance 200D through Wi-Fi communication.

Therefore, as shown in (23-3) of FIG. 23, the second home appliance 200B and the fifth home appliance 200E may be directly connected to the access point 300 through Wi-Fi communication by using AP information of the access point 300, which is received from the mobile terminal 100 when first accessing the local network. Although not shown, the second home appliance 200B and the fifth home appliance 200E may each participate in the local network by using the network node information in the reconfiguration completion signal and may participate in the first home appliance 200A or the third home appliance 200C participating in the local network.

A home appliance first recognizing that an expiration time of the most recently received host alive signal elapses may set the home appliance itself as a host device among the first home appliance 200A, the second home appliance 200B, the third home appliance 200C, and the fifth home appliance 200E. (23-4) of FIG. 23 shows an example in which the first home appliance 200A first recognizes that the expiration time of the host alive signal most recently received from the fourth home appliance 200D elapses and set the first home appliance 200A itself as a host device.

The first home appliance 200A, which newly becomes a host device, may generate a host announcement signal to notify that the first home appliance 200A becomes a host device and transmit the host announcement signal to each client device in the local network.

As described above, the first home appliance 200A, which becomes a new host device, may initiate a process of newly configuring the network topology according to occurrence of the reconfiguration event, and initiate a process of transferring the host role to another home according to occurrence of the host role transfer event.

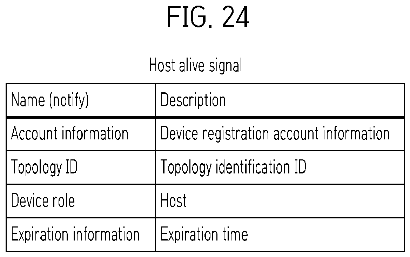

Hereinafter, with reference to FIG. 24, the host alive signal will be described in more detail. FIG. 24 shows an example of information to be included in a host alive signal, according to an embodiment of the present disclosure.

As shown in FIG. 24, the host alive signal is a signal that informs each client device that the host device is operating as a host device, and may include account information, a topology ID, device role information, and expiration information. The host alive signal may not necessarily include all of the information in FIG. 24 and may include at least part of the information. The host alive signal may not have to include only the information in FIG. 24, but may also include other information.

The account information is the same as the above description, and thus a detailed description thereof will be omitted.

The topology ID is a topology ID given to the host device.

The device role information may include role information (i.e., host node) as a network node of the host device.

The expiration information may include information on an expiration time of the host alive signal.

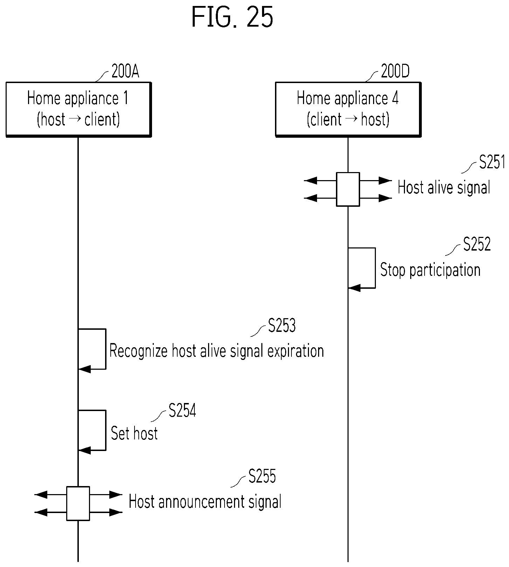

Hereinafter, with reference to FIG. 25, another transfer process of a host role between two home appliances will be described. FIG. 25 is a flowchart of the case in which a host role is transferred between two home appliances, according to an embodiment of the present disclosure.

The fourth home appliance 200D, operating as the host device, may periodically generate the host alive signal indicating that the fourth home appliance 200D itself currently operates as a host device and may transmit the host alive signal to each client device in the local network [5251]. The host alive signal may include information on an expiration time, as described above.

However, the fourth home appliance 200D may stop participating in the local network due to power turn-off, malfunction, and the like while maintaining the host role [S252].

It may be assumed that the first home appliance 200A among the client devices in the local network first recognizes that the expiration time of the most recently received host alive signal elapses [S253].

Then, the first home appliance 200A may set itself to a host device [S254].

The first home appliance 200A, which newly becomes a host device, may generate the host announcement signal to notify that the first home appliance 200A becomes a host device and transmit the host announcement signal to each client device in the local network [S255].

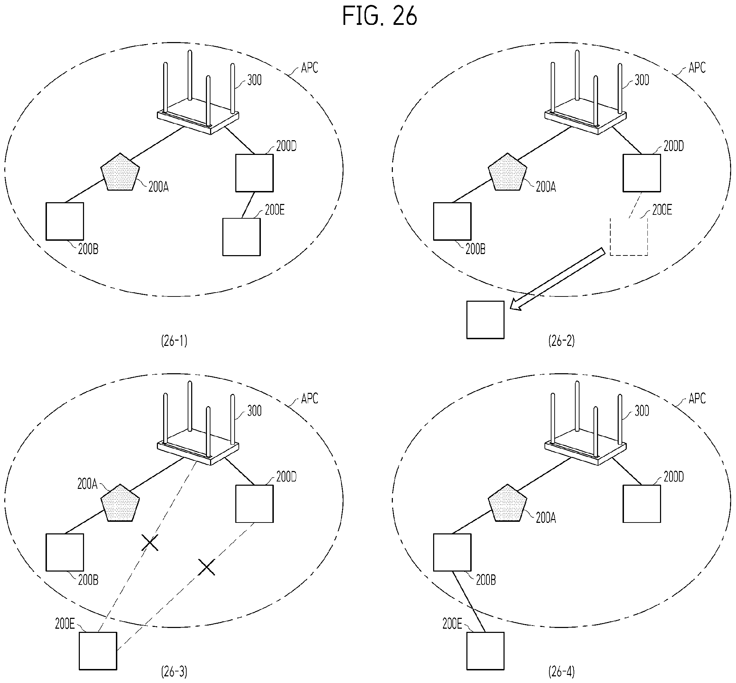

Hereinafter, with reference to FIG. 26, Wi-Fi access to another home appliance within the local network as one home appliance within the local network moves outside a communication coverage (APC) of the access point will be described. FIG. 26 shows an example of a network topology, according to an aspect of the present disclosure.

As shown in (26-1) of FIG. 26, the first home appliance 200A and the fourth home appliance 200D may each be directly connected to the access point 300 through Wi-Fi communication. The second home appliance 200B may be directly connected to the first home appliance 200A through Wi-Fi communication. The fifth home appliance 200E may be directly connected to the fourth home appliance 200D through Wi-Fi communication.

In this case, as shown in (26-2) of FIG. 26, the fifth home appliance 200E may be moved outside the communication coverage (APC) of the access point 300 away from the fourth home appliance 200D.

Accordingly, as shown in (26-3) of FIG. 26, Wi-Fi communication connection between the fifth home appliance 200E and the fourth home appliance 200D may no longer be maintained. The fifth home appliance 200E is located outside the communication coverage (APC) of the access point 300, and thus direct Wi-Fi communication connection with access point 300 by using AP information of the access point 300, which is received from the mobile terminal 100 when first accessing the local network, may also be impossible.

In this case, the fifth home appliance 200E may know that the first home appliance 200A and the second home appliance 200B other than the fourth home appliance 200D participates in the local network by using the network node information in the reconfiguration completion signal.

The fifth home appliance 200E may autonomously search for the software AP of the surrounding device(s) to identify near AP information.

The fifth home appliance 200E may identify the first-priority device that participates in the local network and has the highest signal quality among surrounding device(s). (26-4) of FIG. 26 shows an example in which the first-priority device is the second home appliance 200B.

Therefore, as shown in (26-2) of FIG. 26, the fifth home appliance 200E may attempt Wi-Fi access to the second home appliance 200B by using software AP information of the second home appliance 200B, to be known from the reconfiguration completion signal.

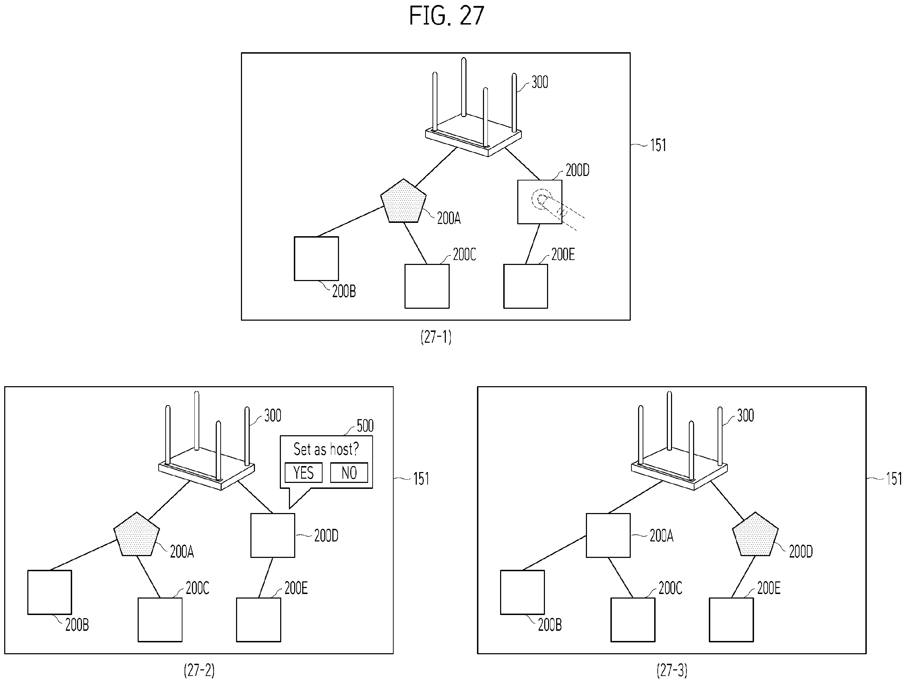

When the mobile terminal 100, which may execute the remote control application for remotely controlling a home appliance, accesses the access point 300, the mobile terminal 100 may receive information about the network topology from a host device of the local network and display schematically on the display unit 151, which will be explained further with reference to FIG. 27. FIG. 27 shows a schematized and displayed network topology, according to an aspect of the present disclosure.

The controller 180 of the mobile terminal 100 may execute the remote control application. The mobile terminal 100 may be connected to the access point 300 through Wi-Fi communication.

Then, as shown in (27-1) of FIG. 27, the controller 180 of the mobile terminal 100 may receive information on the network topology from the host device 200A of the local network and may schematize and display the information on the display unit 151 using a user interface method.

Information about the network topology may be provided from the host device 200A to the external management server 400, and the mobile terminal may also receive information about the network topology from the external management server 400 through a mobile communication network or a short-range communication network. Hereinafter, the schematized network topology will be referred to as a topology user interface.

A user of the mobile terminal 100 may recognize that the first home appliance 200A currently operates as a host device through a shape of each network node of the topology user interface.

The user of the mobile terminal 100 may generate the host role transfer event through the topology user interface. That is, the user may specify a home appliance that the user wishes to operate as a host device through the topology user interface.

The home appliance that the user wishes to operate as a host device is assumed to be the fourth home appliance 200D.

Then, the user may select the fourth home appliance 200D through the topology user interface. When the display unit 151 is configured as a touch screen, the user may select the fourth home appliance 200D by touching the fourth home appliance 200D on the topology user interface.

Then, as shown in (27-2) of FIG. 27, the controller 180 of the mobile terminal 100 may display a menu 500 for setting the fourth home appliance 200D as the host device. The user may confirm setting the fourth home appliance 200D as the host device through the menu 500.

The controller 180 of the mobile terminal 100 may transmit a user command wishing to set the fourth home appliance 200D as the host device, to the first home appliance 200A operating as the host device. The user command may be provided from the mobile terminal 100 to the external management server 400, and the first home appliance 200A may receive the user command from the external management server 400.

As shown in (27-3) of FIG. 27, the host role may be transferred from the first home appliance 200A to the fourth home appliance 200D according to the user command. The transfer of the host role between two home appliances is as described in FIG. 22.

The user may select a home appliance that requires the most stable wireless network environment among various home appliances of the user as the host device.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The above detailed description should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

## Claims

1. A home appliance (200) comprising:
a wireless transceiver (210) for short-distance communication; and
a processor (280) configured to:
communicate with an access point (AP) (300),
transmit a discovery signal for checking whether a host device is present in a local network based on the AP,
perform control to operate as the host device in the local network in response to a discovery response signal corresponding to the discovery signal not being received, and
perform control to operate as a client device in the local network in response to the discovery response signal corresponding to the discovery signal being received.

2. The home appliance (200) of claim 1, wherein the processor (280) is further configured to:
control short-distance communication access to the AP based on AP information of the AP, received from a mobile terminal.

3. The home appliance (200) of claim 2, wherein, based on the home appliance not being capable of accessing the AP through short-distance communication based on the AP information, the processor (280) is further configured to:
receive AP information of an external home appliance connected to the AP via short-distance communication, from the mobile terminal,
access the external home appliance through short-distance communication based on the received AP information of the external home appliance, and
perform control communication with the AP through the external home appliance.

4. The home appliance (200) of claim 2 or 3, wherein, based on the home appliance operating as the host device, the processor (280) is further configured to:
perform control to configure a network topology for a plurality of home appliances in the local network,
wherein the plurality of home appliances includes the home appliance and at least one external home appliance.

5. The home appliance (200) of claim 4, wherein the processor (280) is further configured to:
receive first network information from a first external home appliance of the at least one external home appliance,
calculate a network topology for the first external home appliance based on the first network information, and
perform control to request the first external home appliance to configure the calculated network topology, and
wherein based on the configuration of the network topology by the first external home appliance being completed, the processor is further configured to:
perform control to notify each of the at least one external home appliance of completion of the configuration of the network topology by the first external home appliance.

6. The home appliance (200) of claim 4, wherein, based on a network topology reconfiguration event occurring, the processor (280) is further configured to:
receive separate network information from each of the at least one external home appliance,
calculate a network topology for each of the at least one external home appliance based on the corresponding separate network information, and
perform control to request at least some of the at least one external home appliance to reconfigure a network topology according to the calculated network topology.

7. The home appliance (200) of claim 6, wherein the network topology reconfiguration event includes at least one of arrival of a certain period, arrival of a certain time zone, reduction in a total amount of communication data in the local network to a certain level or less, or receiving of a user command desiring to reconfigure the network topology.

8. The home appliance (200) of claim 6, or 7, wherein, based on a host role transfer event occurring, the processor (280) is further configured to:
request a first external home appliance of the at least one external home appliance to receive transfer of a host role, and
control the home appliance to operate as the client device,
wherein the host role transfer event includes at least one of completion of the reconfiguration of the network topology or receiving, from the mobile terminal, of a user command desiring to transfer the host role, and
wherein the processor is further configured to:
provide information about the network topology to the mobile terminal, and
perform control to request a second external home appliance of the at least one external home appliance to receive transfer of the host role according to the user command desiring to transfer the host role.

9. The home appliance (200) of any one of claims 4-8, wherein the processor (280) is further configured to:
control each of the at least one external home appliance to periodically notify that the home appliance currently operates as the host device.

10. The home appliance (200) of any one of claims 2-9, wherein, based on the home appliance operating as the client device, the processor (280) is further configured to:
transmit network information of the home appliance to the host device in the local network,
receive target AP information from the host device, and
perform control to access a target external home appliance corresponding to the target AP information through short-distance communication,
wherein the network information includes AP information of a network node that the home appliance currently and directly accesses through short-distance communication and AP information of a network node discovered around the home appliance, and
wherein the AP information of the network node includes service set identifier (SSID) information of the network node and quality information of a signal received from the network node.

11. The home appliance (200) of claim 10, wherein the processor (280) is further configured to:
perform control to notify the host device that the access to the target external home appliance through short-distance communication is successful.

12. The home appliance (200) of claim 10 or 11, wherein the processor (280) is further configured to set the home appliance as a new host device according to a request of the host device, and perform control to notify each external home appliance in the local network that the home appliance becomes the new host device.

13. The home appliance (200) of any of claims 10-12, wherein the processor (280) is further configured to:
receive a host alive signal indicating an expiration time from the host device,
set the home appliance as a new host device based on a new host alive signal not being received from the host device by the expiration time, and
perform control to notify each external home appliance in the local network that the home appliance becomes the new host device.

14. The home appliance (200) of any of claims 10-13, wherein the processor (280) is assigned an Internet protocol (IP) address from the AP for a third external home appliance that attempts short-distance communication access to the home appliance and is further configured to perform control to provide the IP address to the third external home appliance.

15. A method performed by a home appliance (200), the method comprising:
communicating with an access point (AP) (300);
transmitting a discovery signal for checking whether a host device is present in a local network based on the AP;
performing control to operate as the host device in the local network in response to a discovery response signal corresponding to the discovery signal not being received; and
performing control to operate as a client device in the local network in response to the discovery response signal corresponding to the discovery signal being received.

## Amended claims

### Amended claims in accordance with Rule 137(2) EPC.

1. A home appliance (200) comprising:
a wireless transceiver (210) for short-distance communication; and
a processor (280) configured to:
communicate with an access point (AP) (300),
transmit a discovery signal for checking whether a host device is present in a local network through the AP, wherein the host device is configured to determine a network topology of the local device,
perform control to operate as the host device in the local network in response to a discovery response signal corresponding to the discovery signal not being received, and
perform control to operate as a client device in the local network in response to the discovery response signal corresponding to the discovery signal being received, wherein the client device is a non-host device.
**characterized in that**
based on the home appliance operating as the host device, the processor (280) is further configured to:
when a plurality of home appliances exists in the local network, determine one of the plurality of home appliances as a new host device, based on both a quality of a communication signal between each home device and the access point, and the number of other home appliances connected to a lower end of each home appliances.

2. The home appliance (200) of claim 1, wherein the processor (280) is further configured to:
control short-distance communication access to the AP based on AP information of the AP, received from a mobile terminal.

3. The home appliance (200) of claim 2, wherein, based on the home appliance not being capable of accessing the AP through short-distance communication based on the AP information, the processor (280) is further configured to:
receive AP information of an external home appliance connected to the AP via short-distance communication, from the mobile terminal,
access the external home appliance through short-distance communication based on the received AP information of the external home appliance, and
perform control communication with the AP through the external home appliance.

4. The home appliance (200) of claim 2 or 3, wherein, based on the home appliance operating as the host device, the processor (280) is further configured to:
perform control to configure a network topology for a plurality of home appliances in the local network,
wherein the plurality of home appliances includes the home appliance and at least one external home appliance.

5. The home appliance (200) of claim 4, wherein the processor (280) is further configured to:
receive first network information from a first external home appliance of the at least one external home appliance,
calculate a network topology for the first external home appliance based on the first network information, and
perform control to request the first external home appliance to configure the calculated network topology, and
wherein based on the configuration of the network topology by the first external home appliance being completed, the processor is further configured to:
perform control to notify each of the at least one external home appliance of completion of the configuration of the network topology by the first external home appliance.

6. The home appliance (200) of claim 4, wherein, based on a network topology reconfiguration event occurring, the processor (280) is further configured to:
receive separate network information from each of the at least one external home appliance,
calculate a network topology for each of the at least one external home appliance based on the corresponding separate network information, and
perform control to request at least some of the at least one external home appliance to reconfigure a network topology according to the calculated network topology.

7. The home appliance (200) of claim 6, wherein the network topology reconfiguration event includes at least one of arrival of a certain period, arrival of a certain time zone, reduction in a total amount of communication data in the local network to a certain level or less, or receiving of a user command desiring to reconfigure the network topology.

8. The home appliance (200) of claim 6, or 7, wherein, based on a host role transfer event occurring, the processor (280) is further configured to:
request a first external home appliance of the at least one external home appliance to receive transfer of a host role, and
control the home appliance to operate as the client device,
wherein the host role transfer event includes at least one of completion of the reconfiguration of the network topology or receiving, from the mobile terminal, of a user command desiring to transfer the host role, and
wherein the processor is further configured to:
provide information about the network topology to the mobile terminal, and
perform control to request a second external home appliance of the at least one external home appliance to receive transfer of the host role according to the user command desiring to transfer the host role.

9. The home appliance (200) of any one of claims 4-8, wherein the processor (280) is further configured to:
periodically notify to each of the at least one external home appliance that the home appliance currently operates as the host device.

10. The home appliance (200) of any one of claims 2-9, wherein, based on the home appliance operating as the client device, the processor (280) is further configured to:
transmit network information of the home appliance to the host device in the local network,
receive target AP information from the host device, and
perform control to access a target external home appliance corresponding to the target AP information through short-distance communication,
wherein the network information includes AP information of a first network node that the home appliance currently and directly accesses through short-distance communication and AP information of a second network node discovered around the home appliance,
wherein the AP information of the first network node includes service set identifier, SSID, information of the first network node and quality information of a signal received from the first network node, and
wherein the AP information of the second network node includes service set identifier, SSID, information of the second network node and quality information of a signal received from the second network node.

11. The home appliance (200) of claim 10, wherein the processor (280) is further configured to:
perform control to notify the host device that the access to the target external home appliance through short-distance communication is successful.

12. The home appliance (200) of claim 10 or 11, wherein the processor (280) is further configured to set the home appliance as a new host device according to a request of the host device, and perform control to notify each external home appliance in the local network that the home appliance becomes the new host device.

13. The home appliance (200) of any of claims 10-12, wherein the processor (280) is further configured to:
receive a host alive signal indicating an expiration time from the host device,
set the home appliance as a new host device based on a new host alive signal not being received from the host device by the expiration time, and
perform control to notify each external home appliance in the local network that the home appliance becomes the new host device.

14. The home appliance (200) of any of claims 10-13, wherein the processor (280) is assigned an Internet protocol, IP, address from the AP for a third external home appliance that attempts short-distance communication access to the home appliance and is further configured to perform control to provide the IP address to the third external home appliance.

15. A method performed by a home appliance (200), the method comprising:
communicating with an access point (AP) (300),
transmitting a discovery signal for checking whether a host device is present in a local network through the AP, the host device determining a network topology of the local device;
performing control to operate as the host device in the local network in response to a discovery response signal corresponding to the discovery signal not being received; and
performing control to operate as a client device in the local network in response to the discovery response signal corresponding to the discovery signal being received, the client device being a non-host device,
**characterized in that**
based on the home appliance operating as the host device, the method further comprises:
when a plurality of home appliances exists in the local network, determining one of the plurality of home appliances as a new host device, based on both a quality of a communication signal between each home device and the access point, and the number of other home appliances connected to a lower end of each home appliances.
